# NEUE EUROPÄISCHE PATENTSCHRIFT

(11) **EP 3 012 198 B2**
(45) Veröffentlichungstag und Bekanntmachung des Hinweises auf die Entscheidung über den Einspruch: **12.07.2023**
(45) Hinweis auf die Patenterteilung: 24.01.2018
(21) Anmeldenummer: 15189611.5
(22) Anmeldetag: 13.10.2015
(51) Int. Cl.: B65B 21/18, B65B 21/20, B65B 35/36, B65B 5/06, B65B 5/08, B65B 5/10

(54) **VORRICHTUNG UND VERFAHREN ZUM UMGANG MIT ARTIKELN**
DEVICE AND METHOD FOR HANDLING ITEMS
DISPOSITIF ET PROCEDE DE MANUTENTION D'ARTICLES

(30) Priorität: 20.10.2014 DE 102014221233
(43) Veröffentlichungstag der Anmeldung: 27.04.2016
(73) Patentinhaber: Krones Aktiengesellschaft, 93073 Neutraubling (DE)
(72) Erfinder: HUTTER, Alban, 93073 Neutraubling (DE); FECHTER, Wolfgang, 93073 Neutraubling (DE); HOFSTETTER, Roland, 93073 Neutraubling (DE)
(74) Vertreter: Grünecker Patent- und Rechtsanwälte PartG mbB

(56) Entgegenhaltungen:
- EP-A1- 1 032 478
- EP-A1- 1 254 854
- EP-A1- 1 529 606
- EP-A1- 2 233 400
- EP-A2- 1 318 074
- WO-A1-2009/024246
- WO-A1-2012/095332
- WO-A1-2013/010697
- WO-A2-2010/003146
- WO-A2-2014/072518
- CH-A5- 693 710
- DE-A1-102012 006 037
- DE-A1-102013 111 088
- DE-U1-202004 021 892
- DE-U1-202014 000 884
- GB-A- 715 134
- GB-A- 999 282
- GB-A- 1 462 677
- GB-A- 1 462 677
- US-A- 4 215 967
- US-A- 4 901 504
- US-A- 5 060 455
- US-A- 5 553 442
- US-B2- 8 286 409

## Beschreibung

Die vorliegende Erfindung betrifft eine Vorrichtung zum Umgang mit Artikeln gemäß den Merkmalen des Oberbegriffes des Anspruchs 1. Der Umgang mit Artikeln sieht häufig vor, einzelne oder mehrere Artikel mit einer Umverpackung zu versehen.

Dies erfolgt im Falle einzelner Artikel zu deren verbessertem Schutz und/oder zu deren verbesserter Verkaufspräsentation.

Im Falle mehrerer Artikel wird durch die Umverpackung zusätzlich ein Gebinde aus mehreren Artikeln erhalten.

Gebinde stellen eine effektive Art dar, den gleichzeitigen Umgang mit mehreren Artikeln zu ermöglichen, beispielsweise um den Transport mehrerer Artikel zugleich zu erleichtern. Gebinde aus mehreren zusammengehaltenen Artikeln stellen daher für viele Artikel, wie beispielsweise Getränkebehälter, die häufigste Variante von Verkaufseinheiten dar.

Bei den Artikeln kann es sich beispielsweise um Objekte, wie etwa beispielsweise verpackte oder unverpackte Gegenstände, Behälter, wie etwa Getränkeflaschen oder Dosen, oder selbst wiederum um Gebinde aus mehreren Objekten handeln, wobei die Objekte eines Gebindes beispielsweise vermittels einer eine Gruppe von Objekten an deren Peripherie umgebenden Umfassung, wie beispielsweise einer Umreifung, einer Umwickelung, einem Schrumpfschlauch oder einer Umverpackung, wie etwa einer Kartonage oder eines Tragegestells, beispielsweise eines Getränkekastens, zusammengehalten werden können, um nur einige denkbare Ausgestaltungen zu nennen.

Als jeweils einen oder mehrere Artikel beherbergende Umverpackungen kommen beispielsweise Kartonschachteln oder Getränkekästen zum Einsatz, um nur einige denkbare Ausgestaltungen zu nennen, da diese einen hohen, gegebenenfalls zusätzlichen Schutz für die in ihnen beherbergten Artikel bieten, darüber hinaus mit den in ihnen beherbergten Artikeln stapelfähig sind, und außerdem das Identifizieren der von ihnen beherbergten Artikel durch auf ihrer Außenseite aufgedruckte oder aufgeklebte Informationen ermöglichen. Ferner können sie durch entsprechende Informationen auf ihrer Außenseite als Werbeträger dienen.

Umverpackungen können mit oder ohne darin angeordnete oder anordbare, einzelne Artikel voneinander trennende und/oder fern haltende, auch als so genannte Baskets bezeichnete Gefache ausgeführt sein.

Als Gefache wird eine in einer Umverpackung anzuordnende oder angeordnete, so genannte Inneneinrichtung, die beispielsweise aus ineinandergesteckten und/oder miteinander beispielsweise durch Knickkanten und/oder Klebeverbindungen verbundenen Stegen bestehen kann, bezeichnet.

Die Stege können beispielsweise aus Karton und/oder Pappe oder Kunststoffen bestehen. Zu Schutz empfindlicher Artikel kann beispielsweise Wellpappe für die Stege verwendet werden. Die Stege sind so miteinander verbunden, dass für je einen oder mehrere Artikel vorgesehene Fächer mit beispielsweise rechteckiger oder dreieckiger oder mehreckiger Grundfläche entstehen, in denen Artikel gegen Verrutschen fixiert sind.

Zusammengefasst weisen Gefache den Artikeln innerhalb der Umverpackungen feste Plätze zu und schützen diese dadurch beim Weitertransport und/oder bei der Lagerung von diese beherbergenden Umverpackungen beispielsweise vor einem Gegeneinanderstoßen und Aneinanderreiben bis zur Entnahme der Artikel und deren Verbrauch, was ansonsten beispielsweise durch Abwetzungsspuren, etwa von auf den Artikeln beispielsweise in Form von Etiketten aufgebrachten Informationen, und/oder Beschädigungen der Artikel untereinander einen negativen Qualitätseindruck zur Folge haben kann.

An einem äußeren Rand eines Gefaches können so genannte Blindgefache oder Blindfächer verwirklicht sein, die beispielsweise als zu klein für die Aufnahme von Artikeln ausgeführt sein können. Blindgefache oder Blindfächer an der Peripherie eines in eine Umverpackung eingesetzten oder in einer Umverpackung angeordneten Gefaches ermöglichen einen zusätzlichen Schutz der in der Umverpackung beherbergten Artikel, beispielsweise bei mechanischer Beanspruchung und/oder Deformation von Artikeln beherbergenden Umverpackungen.

Einen wesentlichen Kostenfaktor beim Umgang mit Artikeln, beispielsweise in der Lebensmittel- und/oder Getränke- und/oder Verpackungstechnik und/oder in der Lebensmittel- und/oder Getränke- und/oder Verpackungsindustrie, stellt die Taktung dar, mit der innerhalb möglichst kurzer Zeit mit möglichst vielen Artikeln umgegangen werden kann. Je höher die Taktung, desto höher ist dabei der Artikelumsatz und um so höher und damit besser ist die Auslastung der hierfür vorgesehenen Maschinen, Anlagen und Einrichtungen. Die Taktung kann somit als Quotient der Anzahl von Artikeln und der Zeitdauer, innerhalb der mit dieser Anzahl von Artikeln umgegangen wird, beschrieben werden.

Um hohe Taktungen erzielen zu können, werden in der Verpackungstechnik und in der Verpackungsindustrie vollautomatische, auch als Umsetzungsmaschinen oder kurz Umsetzer bezeichnete Einrichtungen zum Umsetzen von Artikeln verwendet, welche in Verbindung mit der Bereitstellung von Umverpackungen innerhalb von Bruchteilen von Sekunden den oder die jeweils in eine Umverpackung umzusetzende Artikel aus einem Zulauf aus beispielsweise in einem oder mehreren Artikelströmen aus ununterbrochenen unmittelbar aufeinander folgend oder bereits entsprechend ihrer Anzahl und/oder späteren Anordnung in der Umverpackung voneinander beabstandet gruppiert kontinuierlich oder diskontinuierlich vermittels beispielsweise eines oder mehrerer Fördermittel transportierten Artikeln entnehmen und in die Umverpackung umsetzen.

Um die erzielbare Taktung weiter zu steigern wird angestrebt, möglichst viele Artikel gleichzeitig mit Umverpackungen zu versehen. Hierzu werden gleichzeitig aus einem oder mehreren Artikelströmen so viele Artikel entnommen, wie in gleichzeitig bereitstehende Umverpackungen eingesetzt werden können.

Ein Umsetzer verfügt hierzu über eine Greifeinrichtung mit einem kurz als Greifer bezeichneten, so genannten Greiferkopf je gleichzeitig in eine Umverpackung umzusetzendem Artikel. Der Greiferkopf erfasst einen Artikel von oben her kommend mit einer Greifkraft, die mindestens ausreicht, um den Artikel anzuheben. Dabei muss jeder aus dem Zulauf zu erfassende Artikel möglichst präzise erfasst werden, um Störungen bei der Erfassung und hieraus resultierende Stillstandzeiten auszuschließen.

Es ist ersichtlich, dass solche Umsetzer hoch komplex und damit teuer sind, wodurch Stillstandzeiten, beispielsweise wegen einer Änderung des Formats von Umverpackungen und/oder Artikeln, besonders schmerzhaft sind.

Darüber hinaus stellt der Platzbedarf für den Aufbau der Anlagentechnik einen ebenfalls nicht unerheblichen Kostenfaktor beim Umgang mit Artikeln dar. Den höchsten Kostenfaktor bildet hierbei die für den Aufbau benötigte Stellfläche, da die meisten Anlagen die in Produktionshallen üblichen vorhandenen Raumhöhen nicht ausschöpfen.

Ein Ziel bei der Entwicklung von zumindest einen oder mehrere Umsetzer umfassenden Vorrichtungen zum Umgang mit Artikeln sowie von entsprechenden Vorrichtungen beim Umsetzen von Artikeln in Umverpackungen ausgeführter Verfahren, ist daher, Stillstandzeiten möglichst klein zu halten, ohne jedoch die Taktung zu beeinträchtigen.

Durch DE 42 04 993 ist eine Vorrichtung zum Zuführen von Artikeln an eine kontinuierlich arbeitende Verpackungsmaschine bekannt. Die Vorrichtung umfasst mehrere Greifköpfe, die rotierend angetrieben an jeweils einem Hebel angelenkt sind. Ein Förderband führt Artikel in Richtung der jeweiligen Greifköpfe. Die Artikel sind hierbei in Reihen angeordnet, werden an einem Ende des Förderbandes durch einen Anschlag angehalten und von einem der Greifköpfe entgegengenommen. Nach Entgegennahme wird der Anschlag gesenkt. Weitere Artikel rücken nach, wobei über den Greiferkopf die bereits entgegengenommen Artikel in entsprechenden Kästen platziert und nachfolgend abtransportiert werden. Die weiteren Artikel, welche in der Zwischenzeit nachgerückt sind, können über einen weiteren Greifkopf entgegengenommen und in einem weiteren nachfolgenden Kasten abgesetzt werden.

Bei derartigen aus dem Stand der Technik bekannten Vorrichtungen hat sich gezeigt, dass die erwartete Soll-Position bei Entgegennahme der jeweiligen Artikel vom Förderband nicht immer mit der tatsächlichen Ist-Position übereinstimmt. Insbesondere kann dies der Fall sein, wenn die jeweiligen Artikel als beispielsweise durch PET-Flaschen ausgebildete Behälter ausgeführt sind, die zu Forminstabilität neigen. Auch können Ungenauigkeiten beim Überführen der jeweiligen Artikel auf das Förderband auftreten, so dass die tatsächliche Ist-Position der Artikel nur näherungsweise bekannt ist.

Sofern Abweichungen von der erwarteten Soll-Position auftreten, können die jeweiligen Greifeinrichtungen zur Entgegennahme der jeweiligen Artikel mit den Artikeln kollidieren, wobei die Artikel von den Greifeinrichtungen nicht aufgenommen werden. Hieraus können Beschädigungen an der jeweiligen Greifeinrichtung resultieren. Um diesen Fehler zu korrigieren kann zudem eine Unterbrechung des Prozesses notwendig sein, was zu Verzögerungen in der Artikelherstellung und einem geringeren Durchsatz einhergehend mit einem dramatischen Absinken der Taktung über einen längeren Zeitraum betrachtet führt.

Durch WO 2010/003146 A2 ist eine Vorrichtung zum Umgang mit Artikeln bekannt, welcher Umgang vorsieht, mehrere Artikel gleichzeitig aus einem Zulauf zu entnehmen und in mindestens eine auf einer Bereitstellungsfläche bereitstehende Umverpackung umzusetzen. Die Vorrichtung umfasst einen Zulauf aus in einer Transportrichtung transportierten Artikeln, mindestens eine in Richtung einer Horizontalachse gesehen neben dem Zulauf angeordnete Bereitstellungsfläche, auf welcher mit vom Zulauf entnommenen Artikeln zu befüllende Umverpackungen bereit stehen und/oder bereit gestellt werden und von der die Umverpackungen, nachdem die Artikel in diese eingesetzt worden sind, abtransportiert werden, und eine Greifeinrichtung zum gleichzeitigen Erfassen von mehreren Artikeln aus dem Zulauf. Die Greifeinrichtung weist je Artikel einen von oben her kommend auf einen Artikel in dem Zulauf absenkbaren Greiferkopf auf. Die Greifeinrichtung weist mindestens einen Manipulator mit einem zumindest entlang der Horizontalachse horizontal und entlang einer Vertikalachse vertikal beweglichen Manipulatorkopf auf, an dem die Greiferköpfe angeordnet sind. Die Greiferköpfe sind in zumindest einer ersten horizontalen Richtung parallel zur Transportrichtung des Zulaufs gruppenweise relativ zueinander am Manipulatorkopf translatorisch beweglich angetrieben angeordnet.

Durch DE 20 2014 000 884 U1 ist eine Vorrichtung zum Umgang mit Artikeln bekannt, welcher Umgang vorsieht, mehrere Artikel gleichzeitig aus einem Zulauf zu entnehmen und in mindestens eine auf einer Bereitstellungsfläche bereitstehende Umverpackung umzusetzen. Die Vorrichtung umfasst einen Zulauf aus in einer Transportrichtung transportierten Flaschen und mindestens eine in Richtung einer Horizontalachse gesehen neben dem Zulauf angeordnete Bereitstellungsfläche, auf welcher mit vom Zulauf entnommenen Flaschen zu befüllende Getränkekästen, Kartonagen oder Pinolenkästen bereit stehen und/oder bereit gestellt werden und von der die Getränkekästen, Kartonagen oder Pinolenkästen, nachdem die Flaschen in diese eingesetzt worden sind, abtransportiert werden. Die Vorrichtung umfasst außerdem eine Greifeinrichtung zum gleichzeitigen Erfassen von mehreren Flaschen aus dem Zulauf. Die Greifeinrichtung weist je Flasche einen von oben her kommend auf eine Flasche in dem Zulauf absenkbaren Greiferkopf auf. Die Greifeinrichtung weist mindestens einen Manipulator mit einem entlang der Horizontalachse horizontal und entlang einer Vertikalachse vertikal beweglichen Manipulatorkopf auf, an dem die Greiferköpfe angeordnet sind. Zum Befüllen eines Pinolenkastens durch Einsetzen von Flaschen in die im Getränkekasten abgestellten Kartonagen, werden die Flaschen durch senkrecht verlaufende Einführkanäle hindurch abgesenkt. Sämtliche Greiferköpfe sind starr miteinander verbunden. Werden dem Zulauf gleichzeitig Flaschen für zwei Getränkekästen entnommen, so werden diese anschließend nacheinander in die beiden Getränkekästen eingesetzt, wobei zunächst die Flaschen des einen Getränkekastens in diesen und dann die Flaschen des anderen Getränkekastens in jenen eingesetzt werden.

Durch GB 715 134 A ist eine Vorrichtung zum Umgang mit Artikeln bekannt, welcher Umgang vorsieht, mehrere Artikel gleichzeitig aus einem Zulauf zu entnehmen und in mindestens eine auf einer Bereitstellungsfläche bereitstehende Umverpackung umzusetzen. Die Vorrichtung umfasst einen Zulauf aus in einer Transportrichtung transportierten Artikeln, eine in Richtung der Transportrichtung in Verlängerung des Zulaufs angeordnete Bereitstellungsfläche, auf welcher mit vom Zulauf entnommenen Artikeln zu befüllende Umverpackungen bereit stehen und/oder bereit gestellt werden und von der die Umverpackungen, nachdem die Artikel in diese eingesetzt worden sind, abtransportiert werden, und eine Greifeinrichtung zum gleichzeitigen Erfassen von mehreren Artikeln aus dem Zulauf. Die Greifeinrichtung weist je Artikel einen von oben her kommend auf einen Artikel in dem Zulauf absenkbaren Greiferkopf auf. Die Greifeinrichtung weist mindestens einen Manipulator mit einem zumindest entlang der Transportrichtung horizontal und entlang einer Vertikalachse vertikal beweglichen Manipulatorkopf auf, an dem die Greiferköpfe in mehreren quer zur Transportrichtung verlaufenden Reihen angeordnet sind. Eine erste Reihe ist hierbei starr, und die verbleibenden Reihen sind gegenüber der ersten Reihe beweglich am Manipulatorkopf angeordnet.

Durch EP 2 233 400 A1 ist eine Vorrichtung zum Umgang mit zufällig arrangierten Artikeln bekannt, wobei eine visuelle Erfassung der Artikel vorgesehen ist, um diese zu ordnen.

Eine Aufgabe der Erfindung ist eine Vorrichtung zum besonders wirtschaftlichen Umgang mit Artikeln anzugeben, welcher Umgang vorsieht, mehrere Artikel gleichzeitig aus mindestens einem Zulauf aus beispielsweise in einem oder mehreren Artikelströmen aus ununterbrochenen unmittelbar aufeinander folgend oder bereits entsprechend ihrer Anzahl und/oder späteren Anordnung in der Umverpackung voneinander beabstandet gruppiert kontinuierlich oder diskontinuierlich vermittels beispielsweise eines oder mehrerer Fördermittel transportierten Artikeln zu entnehmen und in mindestens eine Umverpackung umzusetzen.

Die obige Aufgabe wird gelöst mit den Merkmalen des Anspruchs. Weitere vorteilhafte Ausgestaltungen werden durch die Unteransprüche beschrieben.

Ein erster Gegenstand der Erfindung betrifft demnach eine Vorrichtung zum Umgang mit Artikeln, welcher Umgang vorsleht, mehrere Artikel gleichzeitig aus einem Zulauf aus beispielsweise in einem oder mehreren Artikelströmen aus ununterbrochenen unmittelbar aufeinander folgend und/oder voneinander beabstandet, beispielsweise bereits entsprechend ihrer Anzahl und/oder späteren Anordnung in einer Umverpackung voneinander beabstandet gruppiert, kontinuierlich oder diskontinuierlich vermittels beispielsweise eines oder mehrerer Fördermittel in einer Transportrichtung transportierten Artikeln zu entnehmen und in mindestens eine auf einer Bereitstellungsfläche bereitstehende Umverpackung umzusetzen.

Die Vorrichtung umfasst einen Zulauf aus beispielsweise in einem oder mehreren Artikelströmen aus ununterbrochenen unmittelbar aufeinander folgend oder bereits entsprechend ihrer Anzahl und/oder späteren Anordnung in der Umverpackung voneinander beabstandet gruppiert kontinuierlich oder diskontinuierlich in einer Transportrichtung transportierten Artikeln.

Der Zulauf kann beispielsweise mindestens ein Fördermittel umfassen, etwa in Form eines oder mehrerer Horizontalförderer, auf dem die Artikel in einem oder mehreren, beispielsweise durch Gassenbleche voneinander getrennten Artikelströmen aus ununterbrochenen unmittelbar aufeinander folgend oder bereits entsprechend ihrer Anzahl und/oder späteren Anordnung in der Umverpackung voneinander beabstandet gruppiert kontinuierlich oder diskontinuierlich in einer Transportrichtung transportiert werden.

Die Vorrichtung umfasst darüber hinaus mindestens eine in Richtung einer Horizontalachse gesehen neben dem Zulauf angeordnete Bereitstellungsfläche, auf welcher mit den vom Zulauf entnommenen Artikeln zu befüllende Umverpackungen bereit stehen und/oder bereit gestellt werden und von der die Umverpackungen, nachdem die Artikel in diese eingesetzt worden sind, abtransportiert werden. Die Umverpackungen können an Ort und Stelle vor deren Abtransport verschlossen werden, beispielsweise mittels Deckel oder durch Zuklappen und Verschließen von beispielsweise Laschen, die durch Kartonagewände gebildet sein können, welche mit Knickkanten mit den Umverpackungen verbunden sind.

Die Bereitstellungsfläche kann mindestens ein Fördermittel umfassen, etwa in Form eines oder mehrerer Horizontalförderer, auf dem die Umverpackungen bereitstehen.

Mittels mindestens eines von der Bereitstellungsfläche umfassten Fördermittels können die Umverpackungen, nachdem die Artikel in diese eingesetzt worden sind, in einer Abtransportrichtung abtransportiert werden. Die Abtransportrichtung kann hierbei parallel zu der Transportrichtung des Zulaufs in der selben Richtung wie diese, oder entgegengesetzt verlaufen.

Alternativ oder zusätzlich können die Umverpackungen bevor die Artikel in diese eingesetzt werden, mittels des mindestens einen von der Bereitstellungsfläche umfassten Fördermittels in einer Zufuhrtransportrichtung zugeführt werden.

Alternativ kann die Bereitstellungsfläche neben einem Zufuhrfördermittel und/oder einem Abtransportfördermittel oder zwischen einem Zufuhrfördermittel und einem Abtransportfördermittel angeordnet sein, wobei die Umverpackungen zu deren Bereitstellung auf der Bereitstellungsfläche beispielsweise quer zu einer Zufuhrtransportrichtung auf die Bereitstellungsfläche übergeschoben werden und/oder wobei die Umverpackungen, nachdem die Artikel auf der Bereitstellungsfläche in diese eingesetzt worden sind, zu deren Abtransport beispielsweise quer zu einer Abtransportrichtung von der Bereitstellungsfläche auf ein Abtransportfördermittel übergeschoben werden.

Die Abtransportrichtung und/oder die Zufuhrtransportrichtung verläuft bevorzugt parallel zur Transportrichtung des Zulaufs.

Bevorzugt liegt die Bereitstellungsfläche - gegebenenfalls um die Breite eines Zufuhrfördermittels und/oder eines Abtransportfördermittels quer zur Zufuhrtransportrichtung und/oder Abtransportrichtung gesehen beabstandet - parallel zum Zulauf und dessen Transportrichtung.

Die Vorrichtung umfasst außerdem eine Greifeinrichtung zum gleichzeitigen Erfassen von mehreren Artikeln aus dem Zulauf, wobei die Greifeinrichtung je Artikel einen von oben her kommend auf einen Artikel in dem Zulauf absenkbaren Greiferkopf, wie beispielsweise Greiftulpen, ein oder mehrere Greiffinger oder dergleichen, aufweist.

Um die Greiferköpfe der Greifeinrichtung zwischen dem Zulauf und einer oder mehreren auf der Bereitstellungsfläche bereitstehenden Umverpackungen horizontal, und zum Anheben der gleichzeitig erfassten Artikel vom Zulauf, sowie zum Absenken der gleichzeitig erfassten Artikel in die eine oder mehrere auf der Bereitstellungsfläche bereitstehenden Umverpackungen auch vertikal im Raum bewegen zu können, weist die Greifeinrichtung darüber hinaus mindestens einen Manipulator mit einem zumindest entlang der Horizontalachse horizontal und auch entlang einer Vertikalachse vertikal beweglichen Manipulatorkopf auf, an dem die Greiferköpfe der Greifeinrichtung angeordnet sind.

Bei dem mindestens einen Manipulator kann es sich beispielsweise um einen mehrachsigen, beispielsweise sechsachsigen Roboterarm oder ein entlang einer horizontalen Achse lateral hin- und her fahrbares, sowie vorzugsweise auch entlang einer vertikalen Achse anheb- und absenkbares Portal oder einen Tri- oder Quadropoden handeln, um nur einige denkbare Manipulatoren aufzuzählen.

Die Greiferköpfe können in einer ersten horizontalen Richtung parallel zur Transportrichtung des Zulaufs kollektiv am Manipulatorkopf translatorisch beweglich angetrieben angeordnet sein. Besonders bevorzugt verläuft diese erste Richtung quer, beispielsweise orthogonal zur Horizontalachse. Hierdurch können die Greiferköpfe noch während Artikel des Zulaufs eine durch eine vorangehende Entnahme von Artikeln aus dem Zulauf entstandene Lücke schließen, auf die im Zulauf nachkommend eintreffenden Artikel abgesenkt und mit diesen mitbewegt werden, so dass bereits beim Erreichen einer entgegen der Transportrichtung gesehen vordersten Entnahmeposition durch den oder die zuvorderst im Zulauf eintreffend transportierten Artikel diese und nachfolgende Artikel bereits erfasst und gegebenenfalls bereits dem Zulauf entnommen werden. Hierdurch kann eine besonders hohe Taktung erreicht werden.

Alternativ oder zusätzlich kann hierzu der gesamte Manipulatorkopf mitsamt den hieran angeordneten Greiferköpfen in Transportrichtung des Zulaufs beweglich sein.

Ganz gleich, ob die Greiferköpfe in einer ersten horizontalen Richtung parallel zur Transportrichtung des Zulaufs kollektiv am Manipulatorkopf translatorisch beweglich angetrieben angeordnet sind oder nicht, sind die Greiferköpfe in zumindest der ersten horizontalen Richtung parallel zur Transportrichtung des Zulaufs individuell und/oder gruppenweise relativ zueinander am Manipulatorkopf translatorisch beweglich angetrieben angeordnet. Besonders bevorzugt verläuft diese erste Richtung quer, beispielsweise orthogonal zur Horizontalachse.

Hierdurch können gleichzeitig mehrere in einer oder in mehreren, quer zur Transportrichtung parallel liegenden Reihen beispielsweise dicht an dicht in Richtung der Transportrichtung gesehen hintereinander eintreffende Artikel aus dem Zulauf entnommen und auf mehrere auf der Bereitstellungsfläche in einer Richtung parallel zur Transportrichtung beispielsweise voneinander beabstandet bereitstehende Umverpackungen aufgeteilt und gleichzeitig in diese eingesetzt werden. Zumindest kann hierdurch der Abstand zwischen mehreren gleichzeitig aus dem Zulauf entnommenen Artikeln verändert werden, wodurch diese während des Umsetzens beispielsweise in jeweils eine Umverpackung einzusetzende Gruppen aufgeteilt und wiederum zeitgleich in die auf der Bereitstellungsfläche bereitstehenden Umverpackungen eingesetzt werden können.

Darüber hinaus ergibt sich in Verbindung mit einer Erfassung der Ist-Positionen der in Transportrichtung dicht an dicht hintereinander eintreffenden Artikel des Zulaufs die Möglichkeit, die Entnahmepositionen der Greiferköpfe auf diese Ist-Positionen auszurichten und dadurch Fehler bei der Erfassung einzelner Artikel aus dem Zulauf zu verhindern. Solche Fehler können verursacht werden beispielsweise durch Artikel, die durch den Druck von nachfolgenden Artikeln im Zulauf deformiert werden. Nachdem die meisten Artikel im Bereich des Schwerpunkts ihrer Deckfläche zu deren Entnahme aus dem Zulauf gegriffen werden - bei als Getränkeflaschen ausgeführten Artikeln befindet sich hier der Flaschenhals und der Verschlussdeckel - kann eine Deformation bei der gleichzeitigen Entnahme mehrerer Artikel, beispielsweise sechs, zwölf, achtzehn oder mehr in Transportrichtung des Zulaufs gesehen hintereinander, zu einem erheblichen Versatz der erforderlichen Entnahmeposition eines in Bezug auf eine vorderste Entnahmeposition entgegen der Transportrichtung des Zulaufs gesehen weiter hinten zu erfassender Artikel ergeben. Durch translatorische Bewegungsmöglichkeiten der Greiferköpfe relativ zueinander in Richtung parallel zur Transportrichtung können die Entnahmepositionen, welche die Greiferköpfe zur Erfassung für die einzelnen Artikel aus dem Zulauf einnehmen, den Ist-Positionen der Artikel im Zulauf angepasst werden.

Um die Entnahmepositionen der Greiferköpfe am Manipulatorkopf an die Ist-Positionen der Artikel im Zulauf anpassen zu können, umfasst die Vorrichtung Erfassungsmittel für die Ist-Positionen der Artikel ausgehend von einer vordersten Entnahmeposition am Ende des Zulaufs entgegen der Transportrichtung des Zulaufs gesehen. Solche Erfassungsmittel können einen oder mehrere bildgebende Sensoren, wie beispielsweise eine oder mehrere Video- oder Fotokameras, sowie eine einen Bilderkennungsalgorithmus ausführende Steuereinheit umfassen, die in Echtzeit ein von dem mindestens einen bildgebenden Sensor bereitgestelltes Bild des Zulaufs hinsichtlich der Ist-Positionen der nacheinander vom Ende des Zulaufs entgegen der Transportrichtung des Zulaufs gesehen hintereinander eintreffenden und/oder aufgestauten Artikel analysiert und hieraus Steuersignale ableitet, welche individuelle translatorische Bewegungen der einzelnen Greiferköpfe am Manipulatorkopf in Richtung parallel zur Transportrichtung veranlassen, um die Entnahmepositionen der Greiferköpfe an die Ist-Positionen der Artikel im Zulauf anzupassen.

Die Greiferköpfe sind zusätzlich in einer zweiten horizontalen Richtung orthogonal zur Transportrichtung des Zulaufs relativ zueinander am Manipulatorkopf beweglich angetrieben angeordnet. Diese zweite horizontale Richtung verläuft bevorzugt orthogonal zur ersten horizontalen Richtung.

Hierdurch können gleichzeitig mehrere, beispielsweise in mehreren, quer zur Transportrichtung parallel liegenden Reihen nebeneinander eintreffende Artikel aus dem Zulauf entnommen und auf mehrere auf der Bereitstellungsfläche in einer Richtung quer zur Transportrichtung beispielsweise voneinander beabstandet bereitstehende Umverpackungen aufgeteilt und gleichzeitig in diese eingesetzt werden. Grundsätzlich ist hierdurch auch möglich, gleichzeitig mehrere in nur einer Reihe eintreffende Artikel aus dem Zulauf zu entnehmen und auf mehrere auf der Bereitstellungsfläche beispielsweise voneinander beabstandet bereitstehende Umverpackungen aufzuteilen, wobei während die aus dem Zulauf entnommenen Artikel angehoben sind, die Artikel zu einer oder mehreren Anordnungen in beispielsweise rechtwinklig und/oder diagonal angeordneten Reihen und Zeilen gruppiert werden können und anschließend die so erhaltenen Gruppen von Artikeln gleichzeitig in die auf der Bereitstellungsfläche bereitstehenden Umverpackungen eingesetzt werden können.

Darüber hinaus ergibt sich durch die translatorische Bewegungsmöglichkeit der Greiferköpfe orthogonal zur Transportrichtung des Zulaufs die Möglichkeit einer Anpassung an unterschiedliche Artikelabmessungen in einer Richtung quer zur Transportrichtung gesehen, wenn die Artikel in mehreren, beispielsweise durch parallele Gassenbleche voneinander getrennten, parallelen Artikelströmen eintreffen.

Durch am Manipulatorkopf in jeweils zwei voneinander unabhängigen horizontalen Richtungen individuell translatorisch beweglich angetrieben angeordnete Greiferköpfe in Verbindung mit Erfassungsmitteln für die Ist-Positionen der Artikel sowohl in Richtung parallel zur Transportrichtung, als auch quer hierzu, ist die Vorrichtung darüber hinaus in der Lage, Artikel aus einem Zulauf bestehend aus einem ungeordneten Massenstrom von ungeordnet dicht an dicht längs wie quer zur Transportrichtung eintreffenden Artikeln zu entnehmen.

Eine vorteilhafte Ausgestaltung der Erfindung sieht vor, dass die Greiferköpfe um parallel zur Vertikalachse verlaufende Rotationsachsen jeweils einzeln und dadurch relativ zueinander am Manipulatorkopf rotatorisch beweglich angetrieben angeordnet sind.

Hierdurch können die Artikel beim Umsetzen in Umverpackungen beispielsweise alle identisch oder zur Peripherie der Umverpackung hin ausgerichtet werden, beispielsweise damit auf den Artikeln aufgebrachte Informationen von außen her lesbar sind, wenn die Artikel in die Umverpackungen eingesetzt sind, oder damit die Artikel alle in die selbe Richtung ausgerichtet sind, beispielsweise wenn die Umverpackung eine Verkaufseinheit, wie beispielsweise ein Display bildet oder als solche eingesetzt werden kann. Dies steigert den Qualitätseindruck von mit der erfindungsgemäßen Vorrichtung mit Artikeln versehener Umverpackungen.

Jeder Artikel weist eine als Aufstandsfläche des Artikels dienende Grundfläche, eine um eine sich entlang einer normal auf der Grundfläche aufstehenden Hochachse erstreckende Höhe des Artikels von der Grundfläche beabstandete Deckfläche, sowie eine den Umfang der Grundfläche mit dem Umfang der Deckfläche verbindende Mantelfläche auf.

Jeder Artikel weist wie erwähnt eine als Aufstandsfläche des Artikels dienende, beispielsweise kreisrunde oder ovale oder regelmäßige oder unregelmäßige drei-, vier- oder mehreckige Grundfläche, eine beispielsweise der Grundfläche in mathematischem und/oder geometrischem Sinne identische oder ähnliche oder kongruente, um die normal zur Grundfläche erstreckende Höhe des Artikels von der Grundfläche beabstandete Deckfläche, sowie eine den Umfang der Grundfläche mit dem Umfang der Deckfläche verbindende Mantelfläche auf. Vom Schwerpunkt der Grundfläche zum Schwerpunkt der Deckfläche erstreckt sich eine Mittelachse, entlang welcher Mittelachse die Schwerpunkte aller aufeinander folgender, parallel zur Grundfläche liegender Querschnittsflächen des Artikels liegen.

Eine Mittelachse kann dabei beispielsweise definiert sein als stetige oder unstetige mathematische Kurve, auf der die Schwerpunkte aller aufeinander folgender Querschnittsflächen des Artikels liegen. Aus dieser möglichen Unstetigkeit heraus ergibt sich die Möglichkeit, dass der Artikel in aufeinander folgenden Abschnitten bzw. Bereichen verschiedene Mittelachsen aufweist, weshalb wenn im Folgenden von einer Mittelachse die Rede ist, es sich um mindestens eine Mittelachse handeln kann.

Dadurch ergibt sich für einen Artikel eine im Wesentlichen zylindrische Form, die jedoch über die Höhe des Artikels hinweg veränderliche Geometrien der aufeinander folgenden, parallel zur Grundfläche liegenden Querschnittsflächen aufweisen kann, entsprechend beispielsweise einem Kegel, einem Kegelstumpf oder einer Kombination von Zylinder und/oder Kegel und/oder Kegelstumpf. Auch können die Querschnittsflächen ähnlich wie bei einem schiefen Zylinder zumindest abschnittsweise über die Höhe des Artikels hinweg in Richtung parallel zur Grundfläche versetzt zueinander angeordnet sein. Grundsätzlich sind auch beliebige, beispielsweise organische Formen, sei es als Teil oder als Gesamtheit der äußeren Form eines Artikels denkbar.

Bei einem Artikel in Form eines Rotationskörpers, dessen Mittelachse normal auf der Grundfläche aufsteht, entspricht die Mittelachse der Hochachse. Ein Beispiel hierfür ist ein gerader Zylinder, oder eine Flaschenform.

Grund- und Deckfläche können parallel, aber auch schief zueinander angeordnet sein, wie dies beispielsweise von als Getränkebehälter in Form eines Getränkekartons ausgeführten Artikeln bekannt ist.

Bei einem als Behälter, wie etwa einem Getränkebehälter in Form einer Flasche ausgeführten Artikel, kann die gesamte Deckfläche durch eine beispielsweise vermittels eines Deckels verschließbare Öffnung eingenommen werden.

Ein oder mehrere Artikel können ober- und/oder unterhalb wenigstens einer Information tailliert ausgeführt sein.

Werden die Artikel im Zulauf auf deren Aufstandsflächen aufrecht stehend transportiert, so verlaufen die parallel zur Vertikalachse verlaufenden Rotationsachsen, um welche die Greiferköpfe jeweils einzeln am Manipulatorkopf rotatorisch beweglich angetrieben angeordnet sind, ebenfalls parallel zu den Hochachsen der Artikel.

Die Artikel können damit durch die um parallel zur Vertikalachse verlaufende Rotationsachsen individuell rotatorisch beweglich am Manipulatorkopf angeordneten Greiferköpfe der Greifeinrichtung jeweils einzeln beispielsweise durch gleichartige und/oder generell nach außen sichtbar gerichtete Ausrichtung von auf die einzelnen Artikel aufgebrachten Informationen über den Artikel und/oder dessen Inhalt durch Drehen um deren Hochachse ausgerichtet werden.

Bei der Information kann es sich beispielsweise um Designelemente und/oder Grafiken und/oder einen Markennamen und/oder ein Markenzeichen und/oder eine Angabe von Inhaltsstoffen und/oder Nährwerten und/oder eines Verzehrdatums und/oder Transporthinweisen und/oder Gefahrenhinweisen und/oder Lagerungshinweisen und/oder Verarbeitungshinweisen und/oder Gebrauchshinweisen und/oder Adressangaben, wie beispielsweise des herstellenden und/oder abpackenden Betriebs und/oder einer Handelsniederlassung handeln, um nur einige denkbare Informationen aufzuzeigen.

Eine erste bekannte Möglichkeit, Artikel mit Informationen zu versehen sind auf der Mantelfläche aufgebrachte, typischerweise zumindest zum Teil aufgeklebte Informationsträger. Ein typisches Beispiel für einen entsprechenden Informationsträger ist ein Etikett, eine Banderole. Ein in Verbindung mit Artikeln der Lebensmittel- und Getränkeindustrie noch wenig weit verbreitetes Beispiel, wahlweise in Kombination mit einem Etikett, ist ein aufgeklebtes, so genanntes RFID-Tag, welches einen Transponder mit einer Antenne, einem Transciever bestehend aus einem analogen Schaltkreis zum Empfangen und Senden, sowie einen digitalen Schaltkreis und mindestens einen einmal beschreibbaren und oft lesbaren, permanenten Speicher aufweist.

Umgangssprachlich auch Funketiketten genannt, stellt RFID (radio-frequency identification) eine Technologie für Sender-Empfänger-Systeme zum automatischen und berührungslosen Identifizieren und Lokalisieren von Artikeln vermittels Radiowellen dar. Sie erleichtert das Erfassen von Daten erheblich.

Ein RFID-System besteht aus dem RFID-Tag, welches sich am oder im Artikel befindet und in dessen Speicher zumindest einen kennzeichnenden Code enthält, sowie einem Lesegerät zum Auslesen dieser Kennung.

Die Kopplung geschieht durch vom Lesegerät erzeugte elektromagnetische Wechselfelder geringer Reichweite oder durch hochfrequente Radiowellen. Damit werden nicht nur Daten übertragen, sondern auch das RFID-Tag mit Energie versorgt.

Informationen können direkt auslesbar im Speicher des RFID-Tags abgelegt sein, oder sie können auf mindestens einem Server und/oder in mindestens einer Datenbank abgelegt und vermittels des im Speicher des RFID-Tags abgelegten Codes identifizierbar und dadurch mindestens einem Artikel zugeordnet sein.

Durch eine rotatorische Ausrichtung der Artikel bei deren Umsetzen in Umverpackungen erlaubt eine einheitliche, zuverlässige Auslesung solcher RFID-Tags, beispielsweise bei der Passage einer mit Artikeln versehenen Umverpackung bei deren weiterem Umgang, wie beispielsweise dem Transport zu einem Stapelplatz, an dem mehrere gleichartige oder unterschiedliche mit gleichartigen oder unterschiedlichen Artikeln befüllte Umverpackungen zu einem Stapel aufgestapelt werden, beispielsweise indem die befüllten Umverpackungen zunächst zu im fertigen Stapel jeweils eine Stapellage bildenden Packlagen gruppiert und anschließend die Packlagen auf einen bis dato am Stapelplatz errichteten Stapel aufgelegt werden.

Eine zweite bekannte Möglichkeit, Artikel mit Informationen zu versehen, ist der so genannte Direktdruck. Hierbei werden die Informationen drucktechnisch ein- oder mehrfarbig direkt auf die Mantelfläche aufgebracht. Hierbei kann es sich um die selben Informationen handeln, wie sie auch auf einem oder mehreren Informationsträgern sichtbar bereitgestellt werden können.

Beim Direktdruck werden abhängig davon, ob eine Information in einem Einfach- oder in einem Mehrfachdruck aufgebracht wird, in einem oder in mehreren Druckprozessen ein oder mehrere Druckstoffe auf die Oberfläche eines Artikels aufgebracht.

Eine Sonderform stellen auch hierbei RFID-Tags dar, welche ebenfalls im Direktdruck über ein spezielles Druckverfahren stabiler Schaltungen aus Polymeren direkt auf der Mantelfläche von Artikeln hergestellt werden können.

Alternativ oder zusätzlich kann die Information so ausgestaltet sein, dass eine zumindest teilweise frei von Druckstoff ausgebildete Partie einer Information vom Betrachter als Teil der Information wahrgenommen wird. Ein Beispiel hierfür ist ein durch eine von mindestens einen Druckstoff umgebene, frei von Druckstoff ausgebildete Partie der Information gebildetes Motiv. Ein Beispiel hierfür ist ein durch eine frei von Druckstoff ausgebildete Partie der Information hindurch sichtbarer Inhalt eines als wenigstens teilweise transparenter Behälter ausgeführten Artikels, wobei der oder die umgebenden Druckstoffe der Information selbst diesen sichtbaren Inhalt zu einer Form, Figur, einem Schriftzeichen oder einem ganzen Schriftzug aus mehreren Schriftzeichen, wie beispielsweise Buchstaben, Ziffern, Satz- und/oder Wortzeichen ergänzen.

Um die Artikel bei deren Umsetzen vom Zulauf in Umverpackungen rotatorisch auszurichten umfasst die Vorrichtung vorzugsweise Erfassungsmittel für auf den Artikeln aufgebrachte Informationen, wie beispielsweise Ausrichtungsmarkierungen. Solche Erfassungsmittel können einen oder mehrere bildgebende Sensoren, wie beispielsweise eine oder mehrere Video- oder Fotokameras, sowie eine einen Bilderkennungsalgorithmus ausführende Steuereinheit umfassen, die in Echtzeit ein von dem mindestens einen bildgebenden Sensor bereitgestelltes Bild des Zulaufs hinsichtlich der Ausrichtung der eintreffenden Artikel analysiert und hieraus Steuersignale ableitet, welche individuelle Rotationen der einzelnen Greiferköpfe um deren parallel zur Vertikalachse verlaufende Rotationsachsen veranlassen, um die Artikel während des Umsetzens auszurichten.

Alternativ oder zusätzlich kann mindestens ein bildgeberder Sensor derart angeordnet sein, dass dieser Bilder der von der Greifeinrichtung erfassten und beispielsweise angehobenen Artikel erfasst, auf deren Grundlage Steuersignale abgeleitet werden, welche individuelle Rotationen der einzelnen Greiferköpfe um deren parallel zur Vertikalachse verlaufende Rotationsachsen veranlassen, um die Artikel während des Umsetzens auszurichten und/oder einer Feinausrichtung der Artikel dienen. Die Bilder können alternativ oder zusätzlich zur Kontrolle einer tatsächlich erfolgten Ausrichtung herangezogen werden oder dienen.

Alternativ oder zusätzlich können alle Greiferköpfe gemeinsam um eine oder mehrere Greiferköpfe gruppenweise um jeweils eine parallel zur Vertikalachse verlaufende Schwenkachse schwenkbar am Manipulatorkopf beweglich angetrieben angeordnet sein.

Hierdurch können ganze, durch die gemeinsam um eine parallel zur Vertikalachse verlaufende Schwenkachse schwenkbar am Manipulatorkopf beweglich angetrieben angeordnete Greiferköpfe erfasste und gehaltenen Artikel gebildete Artikelgruppen alternativ oder zusätzlich zu deren durch individuelle Rotationen der einzelnen Greiferköpfe um deren parallel zur Vertikalachse verlaufende Rotationsachsen erfolgender individueller Ausrichtung gemeinsam um die Schwenkachse verschwenkt werden, beispielsweise zur Anpassung an ein Format einer Umverpackung.

Hierdurch ergeben sich in besonders bevorzugter Ausgestaltung der Vorrichtung mehrere Freiheitsgrade für die Bewegungsmöglichkeiten der Greiferköpfe der Greifeinrichtung am Manipulatorkopf:
a) In horizontaler Richtung parallel zur Transportrichtung des Zulaufs und bevorzugt quer, beispielsweise orthogonal zur Horizontalachse translatorisch einzeln und/oder gruppenweise voneinander weg und aufeinander zu. Hierdurch können zeitgleich mehrere Artikel beispielsweise dicht an dicht aus dem Zulauf entnommen werden, um daraufhin gleichzeitig in mehrere auf der Bereitstellungsfläche beispielsweise voneinander beabstandet bereitstehende Umverpackungen umgesetzt zu werden. Hierdurch ist die Vorrichtung in der Lage, gleichzeitig Artikel sowohl in eine oder wenige große, als auch in mehrere kleinere Umverpackungen, die auf der Bereitstellungsfläche bereitstehen, umzusetzen. Dadurch ist die Vorrichtung besonders variabel und kann auch bei verschiedenen Formaten von Umverpackungen eingesetzt werden, wodurch Stillstandzeiten aufgrund unterschiedlicher Formate von Umverpackungen vermieden werden. Darüber hinaus kann hierdurch eine Korrektur der Erfassungspositionen von durch einen stetigen Druck nachfolgender Artikel im Zulauf deformierten und/oder unterschiedliche dicht anstehenden Artikeln aus dem Zulauf vorgenommen werden, wodurch Stillstandzeiten aufgrund von Störungen wirkungsvoll vermieden werden. Außerdem kann dadurch eine Anpassung im laufenden Betrieb der Vorrichtung an im Laufe nacheinander folgender Zyklen unterschiedlich beabstandet auf der Bereitstellungsfläche bereitstehende Umverpackungen vorgenommen werden, ähnlich der beschriebenen Anpassungsmöglichkeit an Ist-Positionen der Artikel im Zulauf.
b) In horizontaler Richtung orthogonal zur Transportrichtung des Zulaufs und bevorzugt längs, beispielsweise parallel zur Horizontalachse translatorisch einzeln und/oder gruppenweise parallel zueinander in gleichen oder entgegengesetzten Richtungen, wodurch einerseits in Verbindung mit a) eine Anpassung an unterschiedlich große Grundflächen einnehmende Artikel vorgenommen werden kann, um Stillstandzeiten der Vorrichtung aufgrund eines Wechsels zwischen Artikeln mit unterschiedlichen Artikelabmessungen während des Umgangs mit Artikeln zu vermeiden, und wodurch andererseits auch verschiedene Umverpackungen, wie beispielsweise Umverpackungen mit von einer rechtwinkligen Anordnung abweichender Anordnung der in sie umzusetzenden Artikel bedient werden können. Die in eine Umverpackung eingebrachten Artikel können beispielsweise in einer Reihe geradlinig hintereinander angeordnet sein, oder die in eine Umverpackung eingebrachten Artikel können in rechtwinklig zueinander verlaufenden Reihen und Zeilen regelmäßig angeordnet sein. Um Artikel mit abschnittsweise zylindrischen oder annähernd zylindrischen Formen wie bspw. Getränkedosen oder Getränkeflaschen, möglichst platzsparend zusammenzufassen, können die Artikel in der Umverpackung einen sogenannten Waben- oder Kugelverbund bilden, der auch als genestete Anordnung bezeichnet wird. Hierbei stehen die in benachbarten Reihen in eine Umverpackung eingebrachten Artikel jeweils derart versetzt zueinander, dass die zwischen den Artikeln gebildeten Lücken möglichst gering ausfallen. Die Zeilen verlaufen dabei nicht im rechten Winkel zu den Reihen, sondern diagonal. Die Zeilen können dabei gerade verlaufen oder V-förmig abgewinkelt, oder Zickzackförmig abgewinkelt schräg zu den Reihen verlaufen. Eine solche Waben- oder Kugelanordnung stellt einen Verbund einer gegebenen Anzahl von Artikeln mit der geringstmöglichen Grundfläche dar. Zusammengefasst können die Artikel in einer Umverpackung in einer Reihe linear oder in mehreren Reihen und Zeilen beispielsweise rechtwinklig oder genestet angeordnet sein. Auch eine gemischte Anordnung ist denkbar, abhängig von der Ausgestaltung der Umverpackung. Zusammengefasst können so beispielsweise sowohl Umverpackungen bedient werden, bei denen die Artikel in in rechtem Winkel zueinander verlaufenden Reihen und Zeilen gruppiert eingesetzt werden, ebenso wie solche Umverpackungen, bei denen die Artikel in genesteter Anordnung eingesetzt werden.
c) Individuell rotatorisch um parallel zur Vertikalachse verlaufende Rotationsachsen, wodurch die Artikel während des Umsetzens individuell ausgerichtet werden können.
d) Kollektiv und/oder gruppenweise rotatorisch um eine oder mehrere parallel zur Vertikalachse verlaufende Schwenkachsen, wodurch die Artikel kollektiv oder gruppenweise in unterschiedliche Formate von Umverpackungen, beispielsweise längs- oder quer auf der Bereitstellungsfläche bereitstehende Umverpackungen, umgesetzt werden können.

Durch ein gemeinsames Anheben- und Absenken des Manipulatorkopfs und damit der an diesem angeordneten Greiferköpfe ist die Vorrichtung darüber hinaus in der Lage, mit Artikeln und Umverpackungen unterschiedlicher Höhe umzugehen.

Beschrieben wird ferner ein Verfahren zum Umgang mit Artikeln. Der Umgang sieht hierbei vor, mehrere Artikel gleichzeitig aus einem Zulauf aus beispielsweise in einem oder mehreren Artikelströmen aus ununterbrochenen unmittelbar aufeinander folgend und/oder voneinander beabstandet, beispielsweise bereits entsprechend ihrer Anzahl und/oder späteren Anordnung in einer Umverpackung voneinander beabstandet gruppiert, kontinuierlich oder diskontinuierlich vermittels beispielsweise eines oder mehrerer Fördermittel in einer Transportrichtung transportierten Artikeln zu entnehmen und in mindestens eine auf einer Bereitstellungsfläche bereitstehende Umverpackung umzusetzen.

Das Verfahren sieht vor, zumindest mehrere in einer Transportrichtung hintereinander eintreffende Artikel aus dem Zulauf zu entnehmen, indem diese von oben kommend erfasst und/oder gegriffen und daraufhin angehoben werden.

Dabei können quer zur Transportrichtung gesehen ebenfalls gleichzeitig mehrere Artikel aus dem Zulauf entnommen werden, beispielsweise aus mehreren parallel zueinander in Transportrichtung verlaufenden, etwa durch Gassenbleche voneinander getrennten, jeweils einen eigenen Artikelstrom bildenden Reihen.

Nach der Entnahme der Artikel aus dem Zulauf sieht das Verfahren vor, die Artikel während diese gleichzeitig angehoben sind und gemeinsam vom Zulauf zu einer Bereitstellungsfläche transferiert werden, auf welcher eine oder mehrere Umverpackungen bereitstehen, in welche die dem Zulauf entnommenen Artikel eingesetzt werden sollen, einzeln oder gruppenweise in einer Richtung parallel zur Transportrichtung gesehen durch Vergrößerung und/oder Verkleinerung individueller Abstände zwischen den Artikeln in Transportrichtung gesehen entsprechend einer durch eine oder mehrere auf der Bereitstellungsfläche bereitstehenden Umverpackungen vorgegebenen, vor dem Einsetzen der Artikel in die Umverpackungen herzustellenden Anordnung anzuordnen und dadurch zu gruppieren.

Anschließend sieht das Verfahren vor, die entsprechend einer durch eine oder mehrere auf der Bereitstellungsfläche bereitstehenden Umverpackungen vorgegebene, vor dem Einsetzen der Artikel in die Umverpackungen herzustellenden Anordnung angeordneten Artikel gleichzeitig in die eine oder mehreren auf der Bereitstellungsfläche bereitstehenden Umverpackungen abzusenken und freizugeben.

Im Anschluss hieran kann sich das Verfahren beginnend beim ersten Verfahrensschritt wiederholen, wobei währenddessen vorgesehen sein kann, dass die Umverpackungen, in welche Artikel eingesetzt wurden, von der Bereitstellungsfläche entfernt und neue, leere Umverpackungen auf der Bereitstellungsfläche bereitgestellt werden, während die Verfahrensschritte:
- gleichzeitige Entnahme der Artikel aus dem Zulauf, sowie
- Anordnung der Artikel entsprechend einer durch eine oder mehrere auf der Bereitstellungsfläche bereitstehenden Umverpackungen vorgegebenen, vor dem Einsetzen der Artikel in die Umverpackungen herzustellenden Anordnung während diese gleichzeitig angehoben und vom Zulauf zur Bereitstellungsfläche transferiert werden,
ausgeführt werden.

Zusätzlich sieht das Verfahren vor, die Artikel während diese nach der Entnahme der Artikel aus dem Zulauf noch angehoben sind und vom Zulauf zu einer Bereitstellungsfläche transferiert werden, einzeln oder gruppenweise in einer Richtung quer, beispielsweise orthogonal zur Transportrichtung gesehen durch Vergrößerung und/oder Verkleinerung individueller Abstände zwischen den Artikeln quer, beispielsweise orthogonal zur Transportrichtung gesehen entsprechend einer durch eine oder mehrere auf der Bereitstellungsfläche bereitstehenden Umverpackungen vorgegebenen, vor dem Einsetzen der Artikel in die Umverpackungen herzustellenden Anordnung anzuordnen.

Alternativ oder zusätzlich kann das Verfahren vorsehen, dass die Artikel während diese nach der Entnahme der Artikel aus dem Zulauf noch angehoben sind und vom Zulauf zu einer Bereitstellungsfläche transferiert werden, durch individuelle Rotation jeden Artikels um eigene, parallel zu einer Vertikalachse verlaufende Rotationsachsen ausgerichtet werden.

Alternativ oder zusätzlich kann das Verfahren vorsehen, dass die Artikel während diese nach der Entnahme der Artikel aus dem Zulauf noch angehoben sind und vom Zulauf zu einer Bereitstellungsfläche transferiert werden, durch kollektive Rotation aller Artikel oder von Gruppen von Artikeln um eine oder mehrere, parallel zu einer Vertikalachse verlaufende Schwenkachsen ausgerichtet werden.

Dass Verfahren kann vorsehen, dass die gleichzeitig in eine oder mehrere auf der Bereitstellungsfläche bereitstehende Umverpackungen umzusetzenden Artikel während deren Bewegung in Transportrichtung dem Zulauf gemeinsam entnommen werden.

Alternativ oder zusätzlich kann das Verfahren vorsehen, dass zur Entnahme der Artikel aus dem Zulauf die tatsächlichen Ist-Positionen der Artikel im Zulauf erfasst werden und die Entnahme der Artikel aus dem Zulauf an diese Ist-Positionen angepasst erfolgt.

Sowohl die Vorrichtung, als auch das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente beschriebene Merkmale aufweisen.

Darüber hinaus kann die Vorrichtung alternativ oder zusätzlich einzelne oder eine Kombination mehrerer zuvor oder nachfolgend in Verbindung mit dem Verfahren beschriebene Merkmale aufweisen, ebenso wie das Verfahren alternativ oder zusätzlich einzelne oder eine Kombination mehrerer zuvor oder nachfolgend in Verbindung mit der Vorrichtung beschriebene Merkmale aufweisen kann.

Die Vorrichtung und das Verfahren weisen durch die getroffenen Maßnahmen eine besonders hohe Wirtschaftlichkeit auf.

Die Vorrichtung und das Verfahren erlauben durch die getroffenen Maßnahmen eine hohe Taktung beim Umgang mit Artikeln und eliminieren Stillstandzeiten bis auf ein beim Umstellen von Artikeln und/oder Umverpackungen unvermeidbares Minimum vollkommen.

Die Vorrichtung und das Verfahren ermöglichen beim Abgreifen von Artikeln aus einem Zulauf und deren Umsetzen in Umverpackungen durch die getroffenen Maßnahmen eine hohe Variabilität.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das Verfahren ausgestaltet sein können und stellen keine abschließende Begrenzung dar. Es zeigen in schematischer Darstellung:

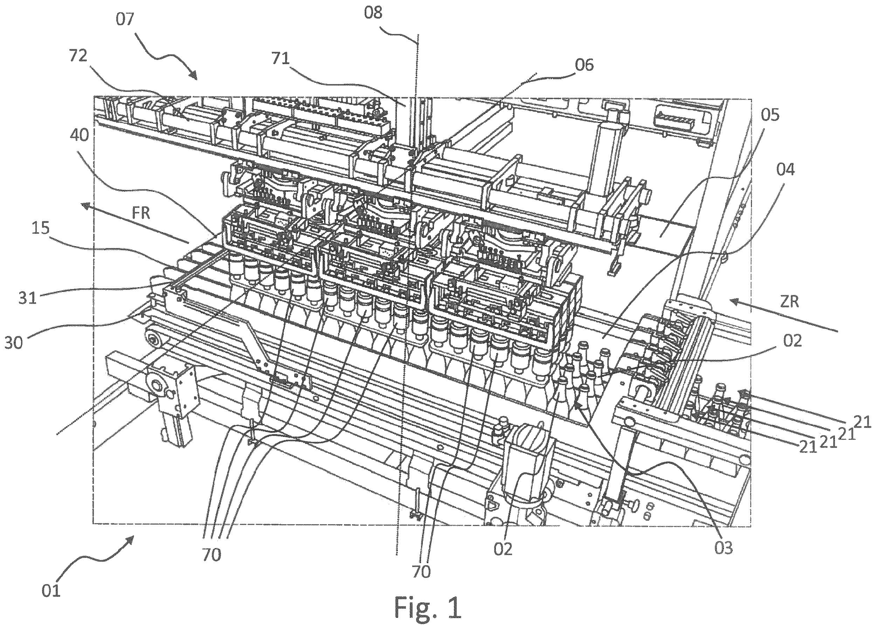

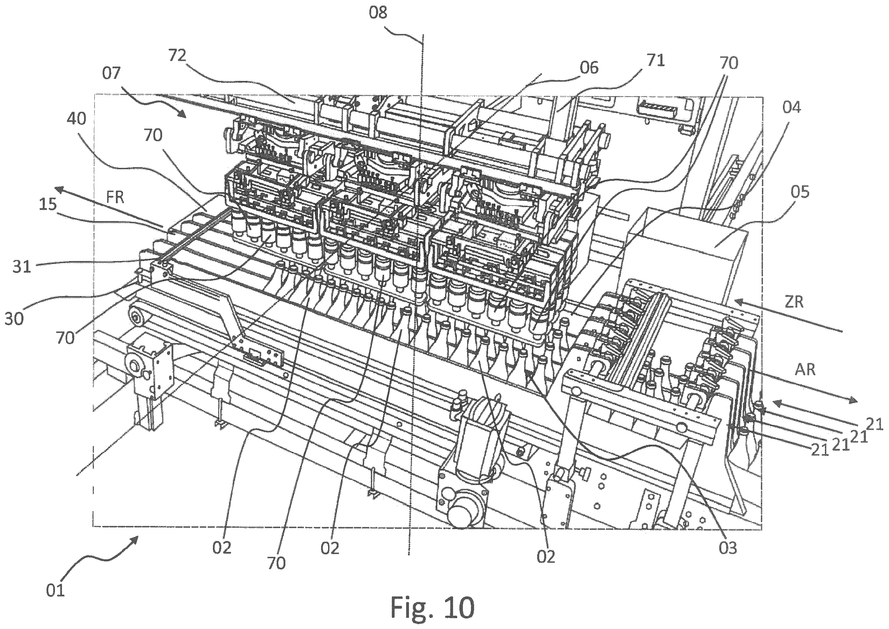

- Fig. 1: eine auf die Momentaufnahme in Fig. 10 wiederkehrende Momentaufnahme einer ein Verfahren zum Umgang mit Artikeln ausführenden, erfindungsgemäßen Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, in einer perspektivischen Ansicht.

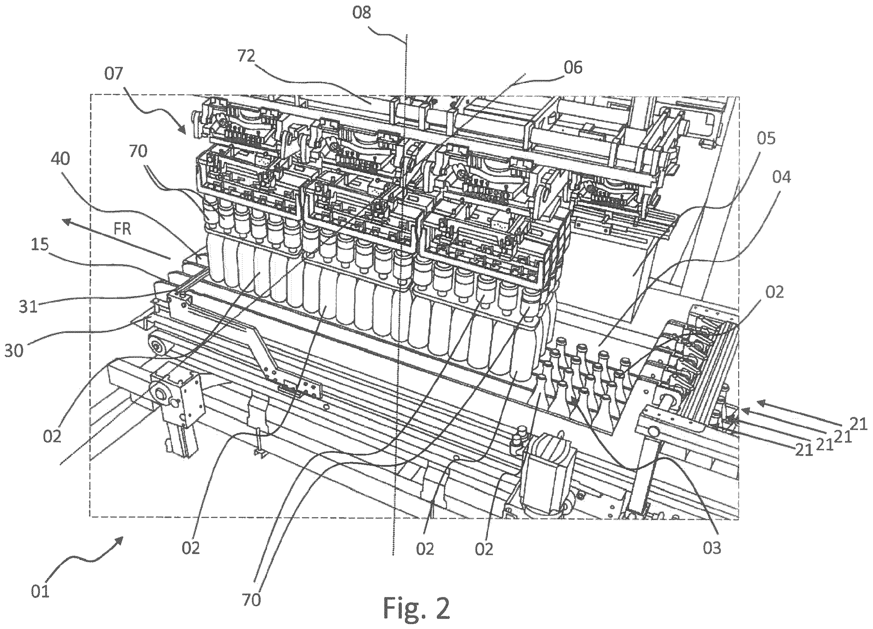

- Fig. 2: eine zeitlich unmittelbar auf die Momentaufnahme in Fig. 1 folgende Momentaufnahme einer ein Verfahren zum Umgang mit Artikeln ausführenden, erfindungsgemäßes Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, in einer perspektivischen Ansicht.

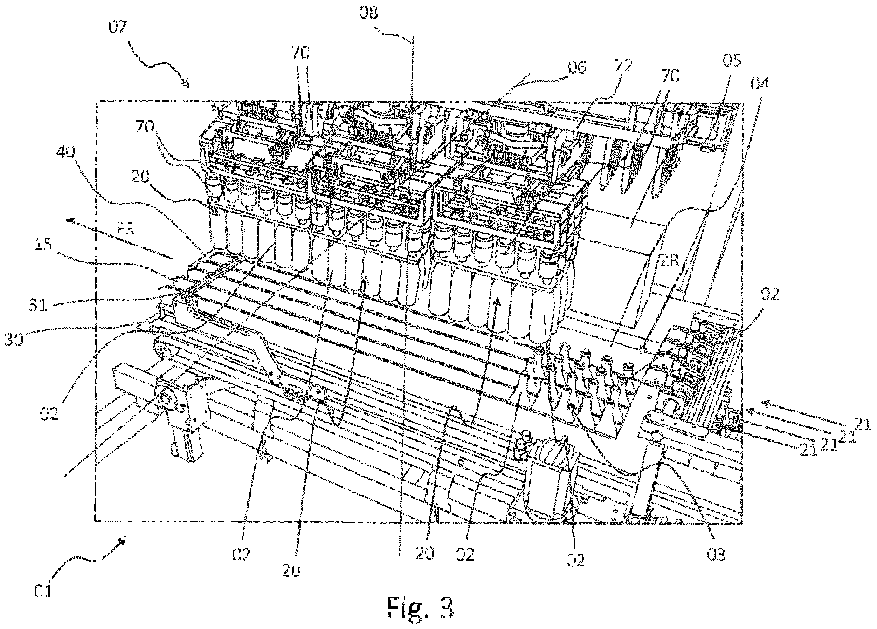

- Fig. 3: eine zeitlich unmittelbar auf die Momentaufnahme in Fig. 2 folgende Momentaufnahme einer ein Verfahren zum Umgang mit Artikeln ausführenden, erfindungsgemäßen Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, in einer perspektivischen Ansicht.

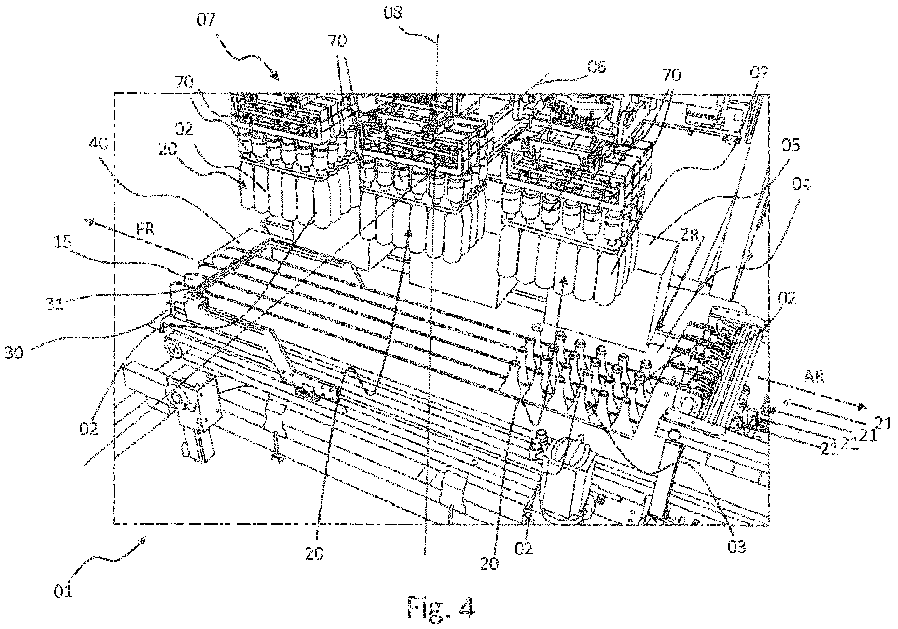

- Fig. 4: eine zeitlich unmittelbar auf die Momentaufnahme in Fig. 3 folgende Momentaufnahme einer ein Verfahren zum Umgang mit Artikeln ausführenden, erfindungsgemäßen Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, in einer perspektivischen Ansicht.

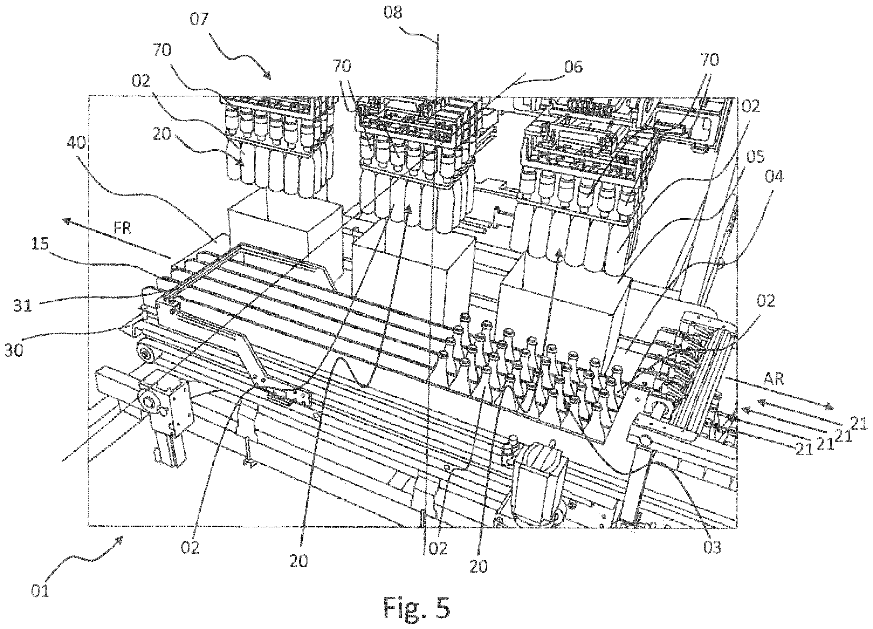

- Fig. 5: eine zeitlich unmittelbar auf die Momentaufnahme in Fig. 4 folgende Momentaufnahme einer ein Verfahren zum Umgang mit Artikeln ausführenden, erfindungsgemäßen Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, in einer perspektivischen Ansicht.

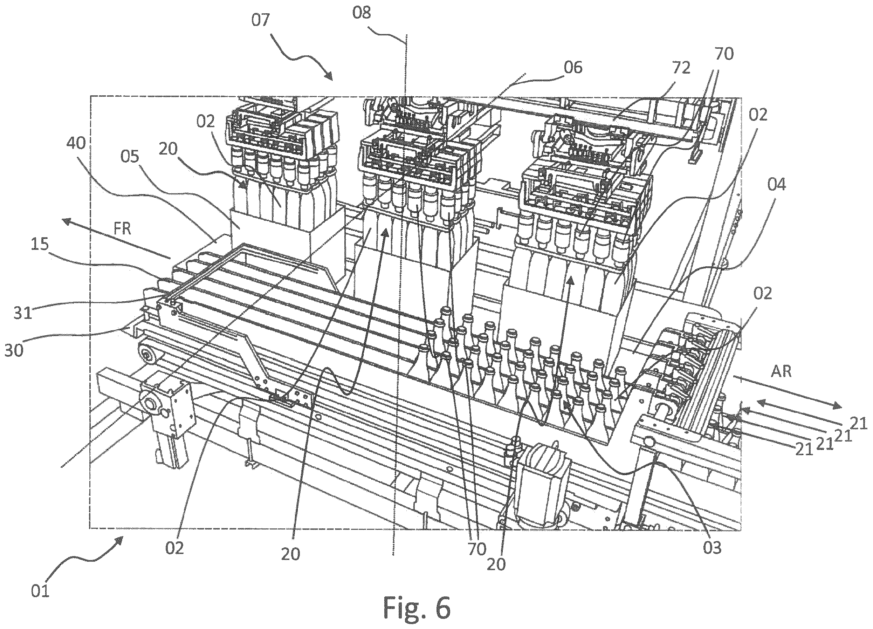

- Fig. 6: eine zeitlich unmittelbar auf die Momentaufnahme in Fig. 5 folgende Momentaufnahme einer ein Verfahren zum Umgang mit Artikeln ausführenden, erfindungsgemäßen Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, in einer perspektivischen Ansicht.

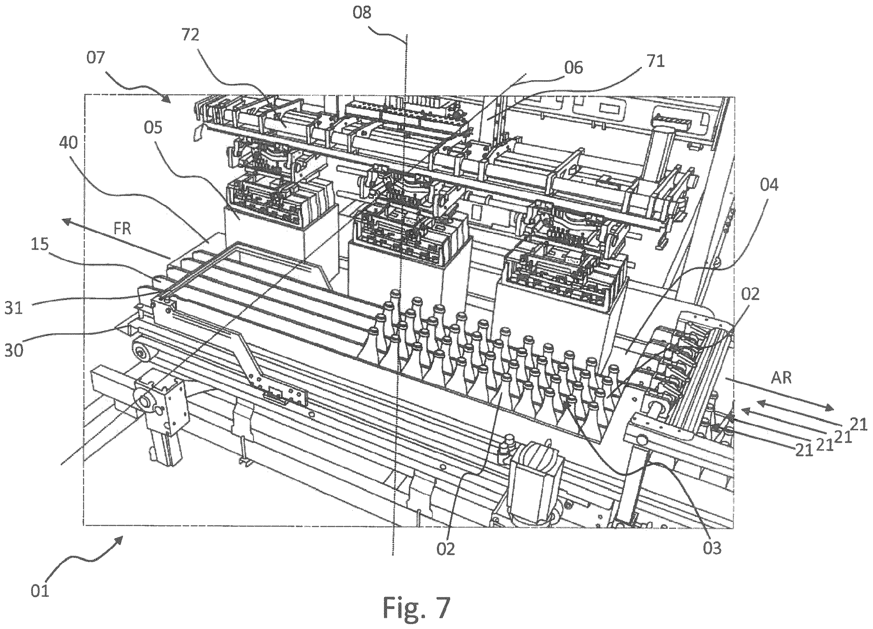

- Fig. 7: eine zeitlich unmittelbar auf die Momentaufnahme in Fig. 6 folgende Momentaufnahme einer ein Verfahren zum Umgang mit Artikeln ausführenden, erfindungsgemäßen Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, in einer perspektivischen Ansicht.

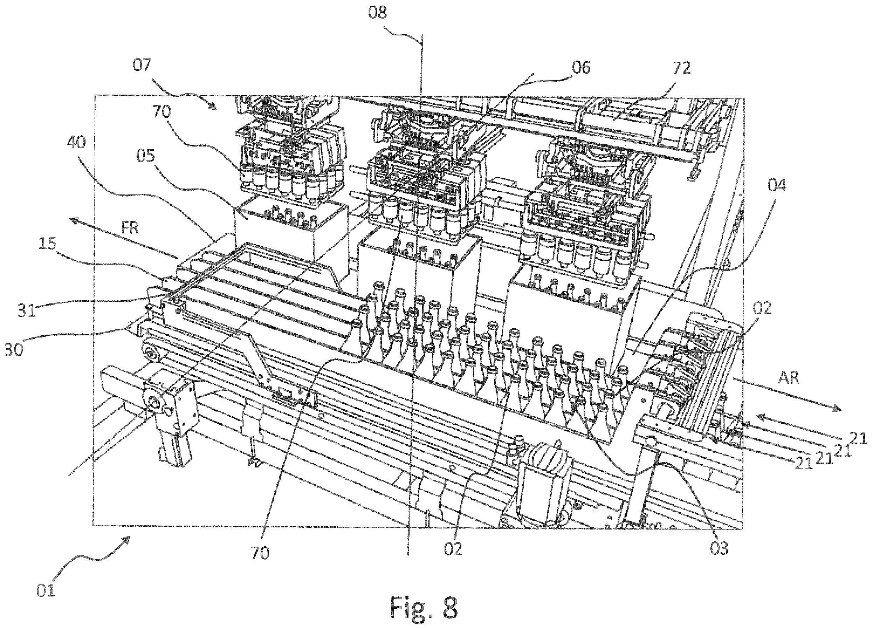

- Fig. 8: eine zeitlich unmittelbar auf die Momentaufnahme in Fig. 7 folgende Momentaufnahme einer ein Verfahren zum Umgang mit Artikeln ausführenden, erfindungsgemäßen Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, in einer perspektivischen Ansicht.

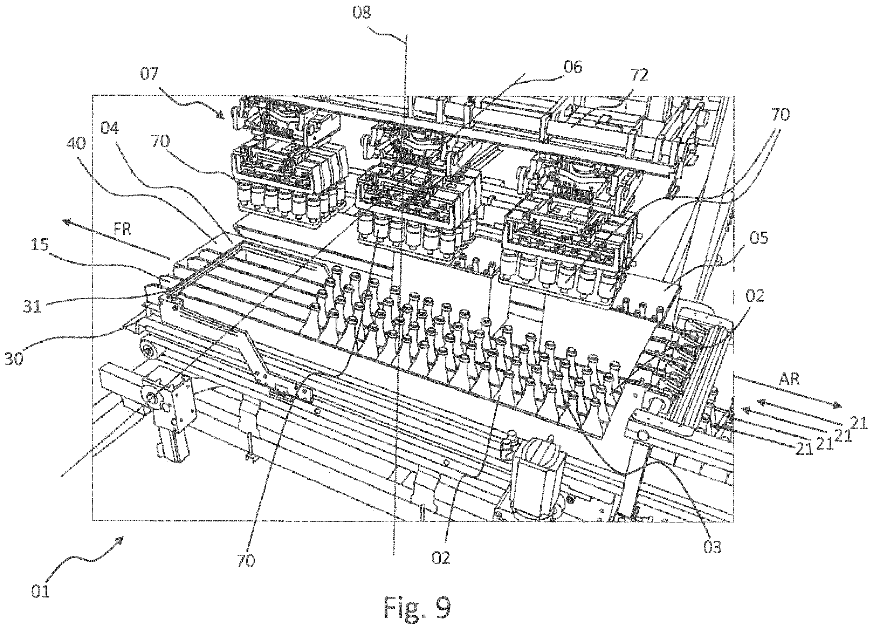

- Fig. 9: eine zeitlich unmittelbar auf die Momentaufnahme in Fig. 8 folgende Momentaufnahme einer ein Verfahren zum Umgang mit Artikeln ausführenden, erfindungsgemäßen Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, in einer perspektivischen Ansicht.
- Fig. 10: eine zeitlich unmittelbar auf die Momentaufnahme in Fig. 9 folgende Momentaufnahme einer ein Verfahren zum Umgang mit Artikeln ausführenden, erfindungsgemäßen Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, in einer perspektivischen Ansicht.

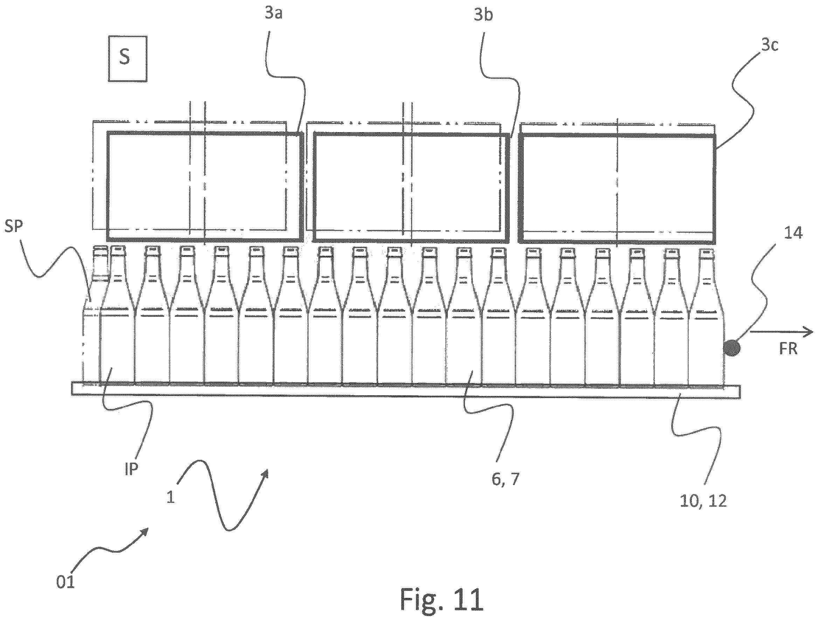

- Fig. 11: eine ein System zur Anpassung der Entnahmepositionen der Greiferköpfe an die Ist-Positionen der Artikel im Zulauf bei der Entnahme zumindest mehrerer in einer Transportrichtung hintereinander eintreffender Artikel aus dem Zulauf bildenden Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, gemäß eines weiteren Ausführungsbeispiels, in einer Seitenansicht.

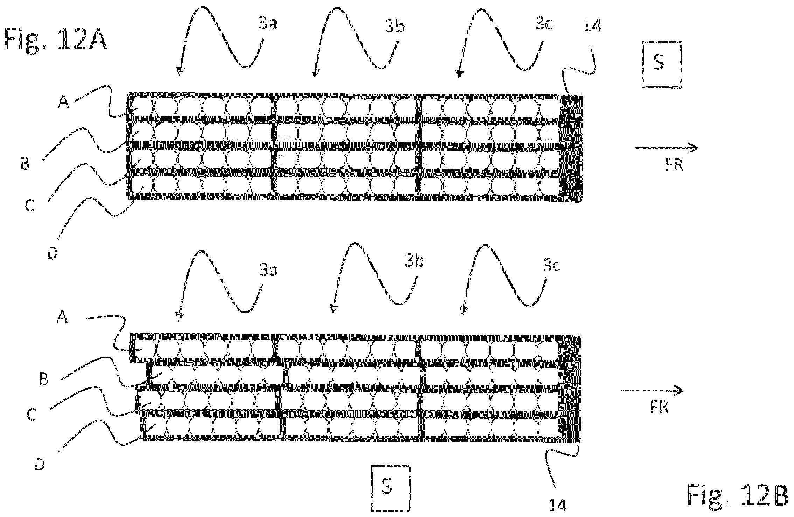

- Fig. 12: eine Prinzipdarstellung der Anpassung der Entnahmepositionen der Greiferköpfe einer ein System zur Anpassung der Entnahmepositionen der Greiferköpfe an die Ist-Positionen der Artikel im Zulauf bei der Entnahme zumindest mehrerer in einer Transportrichtung hintereinander eintreffender Artikel aus dem Zulauf bildenden Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, bei welcher Entnahme die Artikel von oben her kommend erfasst und/oder gegriffen und daraufhin angehoben werden, in einer Draufsicht.

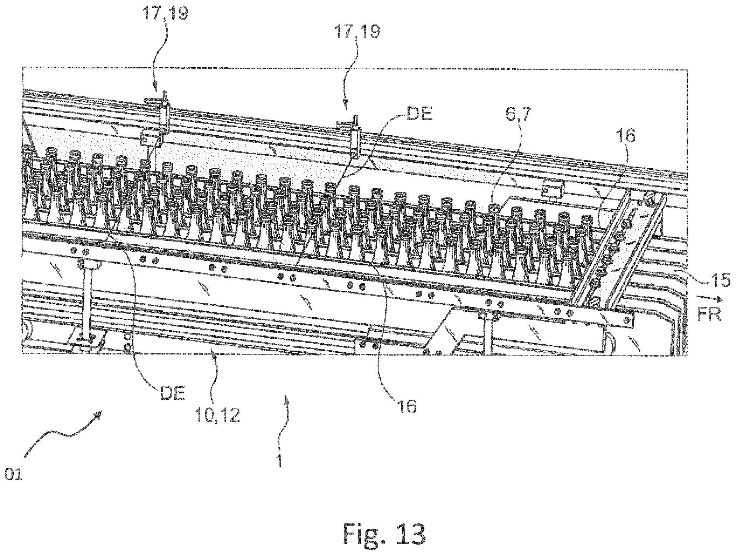

- Fig. 13: eine Detailansicht eines Ausführungsbeispiels von zur Erfassung der Ist-Positionen der Artikel im Zulauf dienender Erfassungsmittel.

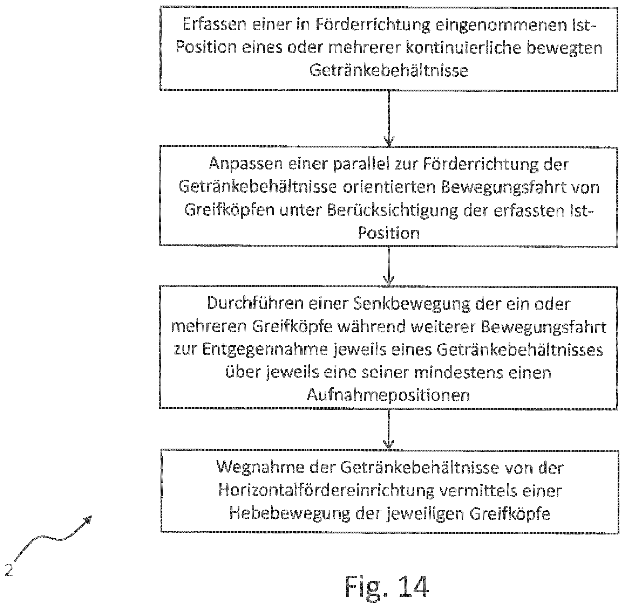

- Fig. 14: ein Ablaufdiagramm eines Verfahrens zur Anpassung der Entnahmepositionen der Greiferköpfe einer Vorrichtung zum Umgang mit Artikeln, welcher Umgang vorsieht, mehrere Artikel gleichzeitig aus einem Zulauf zu entnehmen und in mindestens eine auf einer Bereitstellungsfläche bereitstehende Umverpackung umzusetzen, an die Ist-Positionen der Artikel im Zulauf bei der Entnahme zumindest mehrerer in einer Transportrichtung hintereinander eintreffender Artikel aus dem Zulauf.

Eine in Fig. 1 bis Fig. 10 ganz oder in Teilen dargestellte Vorrichtung 01 zum Umgang mit Artikeln 02, welcher Umgang vorsieht, mehrere Artikel 02 gleichzeitig aus einem Zulauf 03 zu entnehmen und in mindestens eine auf einer Bereitstellungsfläche 04 bereitstehende Umverpackung 05 umzusetzen, umfasst:
- den Zulauf 03 aus beispielsweise in einem oder mehreren, jeweils durch Pfeile dargestellten Artikelströmen 21 aus ununterbrochenen unmittelbar aufeinander folgend oder bereits entsprechend ihrer Anzahl und/oder späteren Anordnung in einer Umverpackung 05 voneinander beabstandet gruppiert kontinuierlich oder diskontinuierlich in einer durch einen Pfeil angedeuteten Transportrichtung FR transportierten Artikeln 02,
- mindestens eine in Richtung einer Horizontalachse 06 gesehen neben dem Zulauf 03 angeordnete Bereitstellungsfläche 04, auf welcher mit den vom Zulauf 03 entnommenen Artikeln 02 zu befüllende Umverpackungen 05 bereit stehen und/oder bereit gestellt werden und von der die Umverpackungen 05, nachdem die Artikel 02 in diese eingesetzt worden sind, abtransportiert werden,
- eine Greifeinrichtung 07 zum gleichzeitigen Erfassen von mehreren Artikeln 02 aus dem Zulauf 03, wobei die Greifeinrichtung 07 je Artikel 02 einen von oben her kommend auf einen Artikel 02 in dem Zulauf 03 absenkbaren Greiferkopf 70, wie beispielsweise Greiftulpen, ein oder mehrere Greiffinger oder dergleichen, aufweist.

Die Greifeinrichtung 07 weist mindestens einen Manipulator 71 mit einem zumindest entlang der Horizontalachse 06 horizontal und auch entlang einer Vertikalachse 08 vertikal beweglichen Manipulatorkopf 72 auf. An dem Manipulatorkopf 72 sind die Greiferköpfe 70 der Greifeinrichtung 07 angeordnet, um die Greiferköpfe 70 der Greifeinrichtung 07 zwischen dem Zulauf 03 und einer oder mehreren auf der Bereitstellungsfläche 04 bereitstehenden Umverpackungen 05 horizontal, und zum Anheben der gleichzeitig erfassten Artikel 02 vom Zulauf 03, sowie zum Absenken der angehobenen, gleichzeitig erfassten Artikel 02 in die eine oder mehrere auf der Bereitstellungsfläche 04 bereitstehenden Umverpackungen 05 auch vertikal im Raum bewegen zu können.

Die Greiferköpfe 70 sind in zumindest einer ersten horizontalen Richtung parallel zur Transportrichtung FR des Zulaufs 03 individuell und/oder gruppenweise relativ zueinander am Manipulatorkopf 72 translatorisch beweglich angetrieben angeordnet.

Zumindest kann hierdurch der Abstand zwischen mehreren gleichzeitig aus dem Zulauf 03 entnommenen Artikeln 02 verändert werden, wodurch diese während des Umsetzens beispielsweise in jeweils eine Umverpackung 05 einzusetzende Gruppen 20 aufgeteilt und wiederum zeitgleich in die auf der Bereitstellungsfläche 04 bereitstehenden Umverpackungen 05 eingesetzt werden können.

Hierdurch können gleichzeitig mehrere in einer oder in mehreren, beispielsweise jeweils einen Artikelstrom 21 bildenden quer zur Transportrichtung FR parallel nebeneinander liegenden Reihen beispielsweise dicht an dicht in Richtung der Transportrichtung FR gesehen hintereinander eintreffende Artikel 02 aus dem Zulauf 03 entnommen und auf mehrere auf der Bereitstellungsfläche 04 in einer Richtung parallel zur Transportrichtung FR beispielsweise voneinander beabstandet bereitstehende Umverpackungen 05 aufgeteilt und gleichzeitig in diese eingesetzt werden.

Dieses Aufteilen geschieht, indem die dem Zulauf 03 entnommenen Artikel 02 während sie angehoben sind und vom Zulauf 03 zur Bereitstellungsfläche 04 transferiert werden, durch Veränderung individueller Abstände zwischen einzelnen, angehobenen Artikeln 02 gruppiert werden. Diese Gruppierung erfolgt entsprechend einer Anordnung der Artikel 02 in einer Umverpackung 05, in welche die zu einer Gruppe 20 gruppierten Artikel 02 eingesetzt werden.

Der Zulauf 03 umfasst in einem oder mehreren, beispielsweise durch in Transportrichtung FR parallel verlaufende, beispielsweise durch Gassenbleche 15 voneinander getrennte Reihen von Artikeln 02 gebildeten Artikelströmen 21 aus ununterbrochenen unmittelbar aufeinander folgend und/oder voneinander beabstandet, beispielsweise bereits entsprechend ihrer Anzahl und/oder späteren Anordnung in einer Umverpackung 05 voneinander beabstandet gruppiert, kontinuierlich oder diskontinuierlich vermittels beispielsweise eines oder mehrerer Fördermittel 30 in der Transportrichtung FR transportierte Artikel 02.

Die Umverpackungen 05 können an Ort und Stelle auf der Bereitstellungsfläche 04 vor deren Abtransport verschlossen werden, beispielsweise mittels Deckel oder durch Zuklappen und Verschließen von beispielsweise Laschen, die durch Kartonagewände gebildet sein können, welche mit Knickkanten mit den Umverpackungen 05 verbunden sind.

Bei dem mindestens einen Manipulator 71 kann es sich beispielsweise um einen mehrachsigen, beispielsweise sechsachsigen Roboterarm oder ein entlang der Horizontalachse 06 lateral hin- und her fahrbares, sowie auch entlang der Vertikalachse 08 anheb- und absenkbares Portal oder einen Tri- oder Quadropoden handeln, um nur einige denkbare Manipulatoren 71 aufzuzählen.

Die erste horizontale Richtung verläuft orthogonal zur Horizontalachse 06.

Zusätzlich können die Greiferköpfe 70 in der ersten horizontalen Richtung parallel zur Transportrichtung FR des Zulaufs 03 kollektiv translatorisch am Manipulatorkopf 72 beweglich angetrieben angeordnet sein, wie dies in zeitlicher Abfolge in Fig. 10, Fig. 1 und Fig. 2 dargestellt ist. Hierdurch können die Greiferköpfe 70 noch während Artikel 02 des Zulaufs 03 eine durch eine vorangehende Entnahme von Artikeln 02 aus dem Zulauf 03 entstandene Lücke schließen, auf die im Zulauf 03 vorzugsweise stetig nachkommend eintreffenden Artikel 02 abgesenkt und mit diesen mitbewegt werden, so dass bereits beim Erreichen einer entgegen der Transportrichtung FR gesehen vordersten Entnahmeposition am Ende 31 des Zulaufs 03 durch den oder die zuvorderst im Zulauf 03 eintreffend transportierten Artikel 02 diese und nachfolgende Artikel 02 bereits erfasst und gegebenenfalls bereits dem Zulauf 03 entnommen werden. Hierdurch kann eine besonders hohe Taktung erreicht werden.

Alternativ oder zusätzlich zu einer translatorischen Kolektivbeweglichkeit der Greiferköpfe 70 am Manipulatorkopf 72 kann der gesamte Manipulatorkopf 72 mitsamt den hieran angeordneten Greiferköpfen 70 in Transportrichtung FR des Zulaufs 03 beweglich sein.

Die Vorrichtung 01 weist, um die Entnahmepositionen der Greiferköpfe 70 am Manipulatorkopf 72 an die Ist-Positionen der Artikel 02 im Zulauf 03 anpassen zu können, Erfassungsmittel 17 zur Erfassung der Ist-Positionen der Artikel ausgehend von einer vordersten Entnahmeposition am Ende 31 des Zulaufs 03 entgegen der Transportrichtung FR des Zulaufs 03 gesehen auf.

Die Erfassungsmittel 17 können einen oder mehrere bildgebende Sensoren, wie beispielsweise eine oder mehrere Video- oder Fotokameras, sowie eine einen Bilderkennungsalgorithmus ausführende Steuereinheit umfassen, die in Echtzeit ein von dem mindestens einen bildgebenden Sensor bereitgestelltes Bild des Zulaufs 03 hinsichtlich der Ist-Positionen der nacheinander vom Ende 31 des Zulaufs 03 entgegen der Transportrichtung FR des Zulaufs 03 gesehen hintereinander eintreffenden und/oder aufgestauten Artikel 02 analysiert und hieraus Steuersignale ableitet, welche individuelle translatorische Bewegungen der einzelnen Greiferköpfe 70 am Manipulatorkopf 72 in Richtung parallel zur Transportrichtung FR veranlassen, um die Entnahmepositionen der Greiferköpfe 70 an die Ist-Positionen der Artikel 02 im Zulauf 03 anzupassen.

In Verbindung mit einer Erfassung der Ist-Positionen der in Transportrichtung FR dicht an dicht hintereinander eintreffenden Artikel 02 des Zulaufs ergibt sich die Möglichkeit, die Entnahmepositionen der Greiferköpfe 70 auf diese Ist-Positionen auszurichten und dadurch Fehler bei der Erfassung einzelner Artikel 02 aus dem Zulauf 03 zu verhindern. Solche Fehler können verursacht werden beispielsweise durch Artikel 02, die durch den Druck von nachfolgenden Artikeln 02 im Zulauf 03 deformiert werden. Nachdem die meisten Artikel 02 im Bereich des Schwerpunkts ihrer Deckfläche zu deren Entnahme aus dem Zulauf 03 gegriffen werden - bei als Getränkeflaschen ausgeführten Artikeln 02 befindet sich hier der Flaschenhals und der Verschlussdeckel - kann eine Deformation bei der gleichzeitigen Entnahme mehrerer Artikel 02 in Transportrichtung FR des Zulaufs 03 gesehen, beispielsweise sechs, zwölf, achtzehn oder mehr hintereinander, zu einem erheblichen Versatz der erforderlichen Entnahmeposition eines in Bezug auf eine vorderste Entnahmeposition entgegen der Transportrichtung FR des Zulaufs 03 gesehen weiter hinten zu erfassender Artikel 02 ergeben. Durch translatorische Bewegungsmöglichkeiten der Greiferköpfe 70 relativ zueinander in Richtung parallel zur Transportrichtung FR können die Entnahmepositionen, welche die Greiferköpfe 70 zur Erfassung für die einzelnen Artikel 02 aus dem Zulauf 03 einnehmen, den Ist-Positionen der Artikel 02 im Zulauf angepasst werden.

Die Greiferköpfe 70 sind zusätzlich in einer zweiten horizontalen Richtung orthogonal zur Transportrichtung FR des Zulaufs 03 relativ zueinander am Manipulatorkopf 72 beweglich angetrieben angeordnet. Diese zweite horizontale Richtung verläuft orthogonal zur ersten horizontalen Richtung.

Hierdurch können gleichzeitig mehrere, beispielsweise in mehreren, quer zur Transportrichtung FR parallel liegenden, jeweils beispielsweise durch einen Artikelstrom 21 gebildeten oder einen solchen Artikelstrom 21 bildenden Reihen nebeneinander eintreffende Artikel 02 aus dem Zulauf 03 entnommen und auf mehrere auf der Bereitstellungsfläche 04 in einer Richtung quer zur Transportrichtung FR beispielsweise voneinander beabstandet bereitstehende Umverpackungen 05 aufgeteilt und gleichzeitig in diese eingesetzt werden. Grundsätzlich ist hierdurch auch möglich, gleichzeitig mehrere in nur einer Reihe eintreffende Artikel 02 aus dem Zulauf zu entnehmen und auf mehrere auf der Bereitstellungsfläche 04 beispielsweise voneinander beabstandet bereitstehende Umverpackungen 05 aufzuteilen, wobei während die aus dem Zulauf 03 entnommenen Artikel 02 angehoben sind, die Artikel 02 zu einer oder mehreren Anordnungen in beispielsweise rechtwinklig und/oder diagonal angeordneten Reihen und Zeilen gruppiert werden können und anschließend die so erhaltenen Gruppen 20 von Artikeln 02 gleichzeitig in die auf der Bereitstellungsfläche 04 bereitstehenden Umverpackungen 05 eingesetzt werden können.

Darüber hinaus ergibt sich durch die translatorische Bewegungsmöglichkeit der Greiferköpfe 70 orthogonal zur Transportrichtung FR des Zulaufs 03 die Möglichkeit einer Anpassung an unterschiedliche Artikelabmessungen in einer Richtung quer zur Transportrichtung FR gesehen, wenn die Artikel 02 in mehreren, beispielsweise durch parallele Gassenbleche 15 voneinander getrennten, parallelen Artikelströmen 21 eintreffen.

Durch am Manipulatorkopf 72 in jeweils zwei voneinander unabhängigen horizontalen Richtungen individuell translatorisch beweglich angetrieben angeordnete Greiferköpfe 70 in Verbindung mit Erfassungsmitteln für die Ist-Positionen der Artikel 02 sowohl in Richtung parallel zur Transportrichtung FR, als auch quer hierzu, ist die Vorrichtung 01 darüber hinaus in der Lage, Artikel 02 aus einem Zulauf 03 bestehend aus einem ungeordneten Massenstrom von ungeordnet dicht an dicht längs wie quer zur Transportrichtung FR eintreffenden Artikeln 02 zu entnehmen.

Die Greiferköpfe 70 können alternativ oder zusätzlich um parallel zur Vertikalachse 08 verlaufende Rotationsachsen jeweils einzeln und dadurch relativ zueinander am Manipulatorkopf 72 rotatorisch beweglich angetrieben angeordnet sein.

Hierdurch können die Artikel 02 beim Umsetzen in Umverpackungen 05 beispielsweise alle identisch oder jeweils individuell zur Peripherie der Umverpackung 05 hin ausgerichtet werden, beispielsweise damit auf den Artikeln 02 aufgebrachte Informationen von außen her lesbar sind, wenn die Artikel 02 in die Umverpackungen 05 eingesetzt sind, oder damit die Artikel 02 alle in die selbe Richtung ausgerichtet sind, beispielsweise wenn die Umverpackung 05 eine Verkaufseinheit, wie beispielsweise ein Display bildet oder als solche eingesetzt werden kann. Dies steigert den Qualitätseindruck von mit der erfindungsgemäßen Vorrichtung 01 mit Artikeln 02 versehener Umverpackungen 05.

Jeder Artikel 02 weist eine als Aufstandsfläche des Artikels 02 dienende, beispielsweise kreisrunde oder ovale oder regelmäßige oder unregelmäßige drei-, vier- oder mehreckige Grundfläche, eine um eine sich entlang einer normal auf der Grundfläche aufstehenden Hochachse erstreckende Höhe des Artikels 02 von der Grundfläche beabstandete beispielsweise der Grundfläche in mathematischem und/oder geometrischem Sinne identische oder ähnliche oder kongruente Deckfläche, sowie eine den Umfang der Grundfläche mit dem Umfang der Deckfläche verbindende Mantelfläche auf.

Vom Schwerpunkt der Grundfläche zum Schwerpunkt der Deckfläche erstreckt sich eine Mittelachse, entlang welcher Mittelachse die Schwerpunkte aller aufeinander folgender, parallel zur Grundfläche liegender Querschnittsflächen des Artikels 02 liegen.

Eine Mittelachse kann dabei beispielsweise definiert sein als stetige oder unstetige mathematische Kurve, auf der die Schwerpunkte aller aufeinander folgender Querschnittsflächen des Artikels 02 liegen. Aus dieser möglichen Unstetigkeit heraus ergibt sich die Möglichkeit, dass der Artikel 02 in aufeinander folgenden Abschnitten bzw. Bereichen verschiedene Mittelachsen aufweist, weshalb wenn im Folgenden von einer Mittelachse die Rede ist, es sich um mindestens eine Mittelachse handeln kann.

Dadurch ergibt sich für einen Artikel 02 eine im Wesentlichen zylindrische Form, die jedoch über die Höhe des Artikels 02 hinweg veränderliche Geometrien der aufeinander folgenden, parallel zur Grundfläche liegenden Querschnittsflächen aufweisen kann, entsprechend beispielsweise einem Kegel, einem Kegelstumpf oder einer Kombination von Zylinder und/oder Kegel und/oder Kegelstumpf. Auch können die Querschnittsflächen ähnlich wie bei einem schiefen Zylinder zumindest abschnittsweise über die Höhe des Artikels 02 hinweg in Richtung parallel zur Grundfläche versetzt zueinander angeordnet sein. Grundsätzlich sind auch beliebige, beispielsweise organische Formen, sei es als Teil oder als Gesamtheit der äußeren Form eines Artikels 02 denkbar.

Bei einem Artikel 02 in Form eines Rotationskörpers, dessen Mittelachse normal auf der Grundfläche aufsteht, entspricht die Mittelachse der Hochachse. Ein Beispiel hierfür ist ein gerader Zylinder, oder eine Flaschenform.

Grund- und Deckfläche können parallel, aber auch schief zueinander angeordnet sein, wie dies beispielsweise von als Getränkebehälter in Form eines Getränkekartons ausgeführten Artikeln 02 bekannt ist.

Bei einem als Behälter, wie etwa einem Getränkebehälter in Form einer Flasche ausgeführten Artikel 02, kann die gesamte Deckfläche durch eine beispielsweise vermittels eines Deckels verschließbare Öffnung eingenommen werden.

Ein oder mehrere Artikel 02 können beispielsweise ober- und/oder unterhalb wenigstens einer Information tailliert ausgeführt sein.

Werden die Artikel 02 im Zulauf 03 auf deren Aufstandsflächen aufrecht stehend transportiert, so verlaufen die parallel zur Vertikalachse 08 verlaufenden Rotationsachsen, um welche die Greiferköpfe 70 jeweils einzeln am Manipulatorkopf 72 rotatorisch beweglich angetrieben angeordnet sind, ebenfalls parallel zu den Hochachsen der Artikel 02.

Die Artikel 02 können damit durch die um parallel zur Vertikalachse 08 verlaufende Rotationsachsen individuell rotatorisch beweglich am Manipulatorkopf 72 angeordneten Greiferköpfe 70 der Greifeinrichtung 07 jeweils einzeln beispielsweise durch gleichartige und/oder generell nach außen sichtbar gerichtete Ausrichtung von auf die einzelnen Artikel 02 aufgebrachten Informationen über den jeweiligen Artikel 02 und/oder dessen Inhalt durch Drehen um deren Hochachse ausgerichtet werden.

Um die Artikel 02 bei deren Umsetzen vom Zulauf 03 in Umverpackungen 05 rotatorisch auszurichten umfasst die Vorrichtung 01 vorzugsweise Erfassungsmittel beispielsweise für auf den Artikeln 02 aufgebrachte Informationen, wie beispielsweise Ausrichtungsmarkierungen. Solche Erfassungsmittel können einen oder mehrere bildgebende Sensoren, wie beispielsweise eine oder mehrere Video- oder Fotokameras, sowie eine einen Bilderkennungsalgorithmus ausführende Steuereinheit umfassen, die in Echtzeit ein von dem mindestens einen bildgebenden Sensor bereitgestelltes Bild des Zulaufs hinsichtlich der Ausrichtung der eintreffenden Artikel 02 analysiert und hieraus Steuersignale ableitet, welche individuelle Rotationen der einzelnen Greiferköpfe 70 um deren parallel zur Vertikalachse 08 verlaufende Rotationsachsen veranlassen, um die Artikel 02 während des Umsetzens auszurichten.

Alternativ oder zusätzlich kann mindestens ein bildgeberder Sensor derart angeordnet sein, dass dieser Bilder der von der Greifeinrichtung 07 erfassten und beispielsweise angehobenen Artikel 02 erfasst, auf deren Grundlage Steuersignale abgeleitet werden, welche individuelle Rotationen der einzelnen Greiferköpfe 70 um deren parallel zur Vertikalachse 08 verlaufende Rotationsachsen veranlassen, um die Artikel 02 während des Umsetzens auszurichten und/oder einer Feinausrichtung der Artikel 02 dienen. Die Bilder können alternativ oder zusätzlich zur Kontrolle einer tatsächlich erfolgten Ausrichtung herangezogen werden oder dienen.

Alternativ oder zusätzlich zu der zuvor beschriebenen Anordnung, bei der die Greiferköpfe 70 jeweils um eigene parallel zur Vertikalachse 08 verlaufende Rotationsachsen individuell verdrehbar am Manipulatorkopf 72 angeordnet sind, kann vorgesehen sein, dass alle Greiferköpfe 70 gemeinsam um eine parallel zur Vertikalachse 08 verlaufende Schwenkachse oder jeweils mehrere Greiferköpfe 70 gruppenweise um jeweils eine parallel zur Vertikalachse 08 verlaufende Schwenkachse schwenkbar am Manipulatorkopf 72 beweglich angetrieben angeordnet sind.

Hierdurch können ganze, durch die gemeinsam um eine parallel zur Vertikalachse 08 verlaufende Schwenkachse schwenkbar am Manipulatorkopf 72 beweglich angetrieben angeordnete Greiferköpfe 70 erfasste und gehaltenen Artikel 02 gebildete Gruppen 20 alternativ oder zusätzlich zu deren durch individuelle Rotationen der einzelnen Greiferköpfe 70 um deren parallel zur Vertikalachse 08 verlaufende Rotationsachsen erfolgender individueller Ausrichtung gemeinsam um die parallel zur Vertikalachse 08 verlaufende Schwenkachse verschwenkt werden, beispielsweise zur Anpassung an ein Format einer Umverpackung 05.

Zusammengefasst ergeben sich in besonders bevorzugter Ausgestaltung der Vorrichtung 01 mehrere Freiheitsgrade für die Bewegungsmöglichkeiten der Greiferköpfe 70 der Greifeinrichtung 07 am Manipulatorkopf 72:
a) In horizontaler Richtung parallel zur Transportrichtung FR des Zulaufs 03 und bevorzugt quer, beispielsweise orthogonal zur Horizontalachse 06 translatorisch einzeln und/oder gruppenweise voneinander weg und aufeinander zu. Hierdurch können zeitgleich mehrere Artikel 02 beispielsweise dicht an dicht aus dem Zulauf 03 entnommen werden, um daraufhin gleichzeitig in mehrere auf der Bereitstellungsfläche 04 beispielsweise voneinander beabstandet bereitstehende Umverpackungen 05 umgesetzt zu werden. Hierdurch ist die Vorrichtung 01 in der Lage, gleichzeitig Artikel 02 sowohl in eine oder wenige große, als auch in mehrere kleinere Umverpackungen 05, die auf der Bereitstellungsfläche 04 bereitstehen, umzusetzen. Dadurch ist die Vorrichtung 01 besonders variabel und kann auch bei verschiedenen Formaten von Umverpackungen 05 eingesetzt werden, wodurch Stillstandzeiten aufgrund unterschiedlicher Formate von Umverpackungen 05 vermieden werden. Darüber hinaus kann hierdurch eine Korrektur der Erfassungspositionen von durch einen stetigen Druck nachfolgender Artikel 02 im Zulauf 03 deformierten und/oder unterschiedliche dicht anstehenden Artikeln 02 aus dem Zulauf 03 vorgenommen werden, wodurch Stillstandzeiten aufgrund von Störungen wirkungsvoll vermieden werden. Außerdem kann dadurch eine Anpassung im laufenden Betrieb der Vorrichtung 01 an im Laufe nacheinander folgender, jeweils durch einen in Fig. 1 bis Fig. 10 dargestellten zeitlichen Ablauf dargestellter Zyklen unterschiedlich beabstandet auf der Bereitstellungsfläche 04 bereitstehende Umverpackungen 05 vorgenommen werden, ähnlich der beschriebenen Anpassungsmöglichkeit an Ist-Positionen der Artikel 02 im Zulauf 03.
b) In horizontaler Richtung orthogonal zur Transportrichtung FR des Zulaufs 03 und bevorzugt längs, beispielsweise parallel zur Horizontalachse 06 translatorisch einzeln und/oder gruppenweise parallel zueinander in gleichen oder entgegengesetzten Richtungen, wodurch einerseits in Verbindung mit a) eine Anpassung an unterschiedlich große Grundflächen einnehmende Artikel 02 vorgenommen werden kann, um Stillstandzeiten der Vorrichtung 01 aufgrund eines Wechsels zwischen Artikeln 02 mit unterschiedlichen Artikelabmessungen während des Umgangs mit Artikeln 02 zu vermeiden, und wodurch andererseits auch verschiedene Umverpackungen 05, wie beispielsweise Umverpackungen 05 mit von einer rechtwinkligen Anordnung abweichender Anordnung der in sie umzusetzenden Artikel 02 bedient werden können. Die in eine Umverpackung 05 eingebrachten Artikel 02 können beispielsweise in einer Reihe geradlinig hintereinander angeordnet sein, oder die in eine Umverpackung 05 eingebrachten Artikel 02 können in rechtwinklig zueinander verlaufenden Reihen und Zeilen regelmäßig angeordnet sein. Um Artikel 02 mit abschnittsweise zylindrischen oder annähernd zylindrischen Formen wie bspw. Getränkedosen oder Getränkeflaschen, möglichst platzsparend zusammenzufassen, können die Artikel 02 in der Umverpackung 05 einen sogenannten Waben- oder Kugelverbund bilden, der auch als genestete Anordnung bezeichnet wird. Hierbei stehen die in benachbarten Reihen der in eine Umverpackung 05 eingebrachten Artikel 02 jeweils derart versetzt zueinander, dass die zwischen den Artikeln 02 gebildeten Lücken möglichst gering ausfallen. Die Zeilen verlaufen dabei nicht im rechten Winkel zu den Reihen, sondern diagonal. Die Zeilen können dabei gerade verlaufen oder V-förmig abgewinkelt, oder Zickzackförmig abgewinkelt schräg zu den Reihen verlaufen. Eine solche Waben- oder Kugelanordnung stellt einen Verbund einer gegebenen Anzahl von Artikeln 02 mit der geringstmöglichen Grundfläche dar. Zusammengefasst können die Artikel 02 in einer Umverpackung 05 in einer Reihe linear oder in mehreren Reihen und Zeilen beispielsweise rechtwinklig oder genestet angeordnet sein. Auch eine gemischte Anordnung ist denkbar, abhängig von der Ausgestaltung der Umverpackung 05. Zusammengefasst können so beispielsweise sowohl Umverpackungen 05 bedient werden, bei denen die Artikel 02 in in rechtem Winkel zueinander verlaufenden Reihen und Zeilen gruppiert eingesetzt werden, ebenso wie solche Umverpackungen 05, bei denen die Artikel 02 in genesteter Anordnung eingesetzt werden.
c) Individuell rotatorisch um parallel zur Vertikalachse 08 verlaufende Rotationsachsen, wodurch die Artikel 02 während des Umsetzens individuell ausgerichtet werden können.
d) Kollektiv und/oder gruppenweise rotatorisch um eine oder mehrere parallel zur Vertikalachse 08 verlaufende Schwenkachsen, wodurch die Artikel 02 kollektiv oder gruppenweise in unterschiedliche Formate von Umverpackungen 05, beispielsweise längs- oder quer auf der Bereitstellungsfläche 04 bereitstehende Umverpackungen 05, umgesetzt werden können.

Durch ein gemeinsames Anheben- und Absenken des Manipulatorkopfs 72 und damit der an diesem angeordneten Greiferköpfe 70 ist die Vorrichtung 01 darüber hinaus in der Lage, mit Artikeln 02 und Umverpackungen 05 unterschiedlicher Höhe umzugehen.

Die Bereitstellungsfläche 04 kann mindestens ein Fördermittel 40 umfassen, etwa in Form eines oder mehrerer Horizontalförderer, auf dem die Umverpackungen 05 bereitstehen oder bereitgestellt werden, oder die Bereitstellungsfläche 04 kann von einem solchen Fördermittel 40 umfasst werden.

Mittels mindestens eines von der Bereitstellungsfläche 04 umfassten Fördermittels 40 oder einer durch ein beispielsweise kontinuierlich oder intermittierend betriebenes Fördermittel 40 gebildeten Bereitstellungsfläche 04 können die Umverpackungen 05, nachdem die Artikel 02 in diese eingesetzt worden sind, in einer durch einen Pfeil angedeuteten Abtransportrichtung AR abtransportiert werden. Die Abtransportrichtung kann hierbei parallel zu der Transportrichtung FR des Zulaufs in der selben Richtung wie diese, oder entgegengesetzt verlaufen.

Alternativ oder zusätzlich können die Umverpackungen 05 bevor die Artikel 02 in diese eingesetzt werden, mittels des mindestens einen von der Bereitstellungsfläche 04 umfassten Fördermittels 40 in einer durch einen Pfeil angedeuteten Zufuhrtransportrichtung ZR zugeführt werden.

Die Bereitstellungsfläche 04 kann neben einem Zufuhrfördermittel und/oder einem Abtransportfördermittel oder zwischen einem Zufuhrfördermittel und einem Abtransportfördermittel angeordnet sein, wobei die Umverpackungen 05 zu deren Bereitstellung auf der Bereitstellungsfläche 04 beispielsweise quer zu einer Zufuhrtransportrichtung ZR auf die Bereitstellungsfläche 04 übergeschoben werden und/oder wobei die Umverpackungen 05, nachdem die Artikel 02 auf der Bereitstellungsfläche 04 in diese eingesetzt worden sind, zu deren Abtransport beispielsweise quer zu einer Abtransportrichtung AR von der Bereitstellungsfläche 04 auf ein Abtransportfördermittel übergeschoben werden.

Die Abtransportrichtung AR und/oder die Zufuhrtransportrichtung ZR verläuft bevorzugt parallel zur Transportrichtung FR des Zulaufs 03.

Bevorzugt liegt die Bereitstellungsfläche 04 - gegebenenfalls um die Breite eines Zufuhrfördermittels und/oder eines Abtransportfördermittels quer zur Zufuhrtransportrichtung ZR und/oder Abtransportrichtung AR gesehen beabstandet - parallel zum Zulauf 03 und dessen Transportrichtung FR.

Der Zulauf 03 kann mindestens ein Fördermittel 30 umfassen oder durch mindestens ein Fördermittel 30 gebildet sein, etwa in Form eines oder mehrerer Horizontalförderer, auf dem die Artikel 02 in einem oder mehreren, beispielsweise durch Gassenbleche 15 voneinander getrennten Artikelströmen 21 aus ununterbrochenen unmittelbar aufeinander folgend oder bereits entsprechend ihrer Anzahl und/oder späteren Anordnung in der Umverpackung 05 voneinander beabstandet gruppierten Artikeln 02 kontinuierlich oder diskontinuierlich in der Transportrichtung FR transportiert werden.

Die Vorrichtung 01 kann darüber hinaus eine Steuereinrichtung umfassen, welche wenigstens:
- den mindestens einen Manipulator 71 so steuert, dass dieser einen zyklischen Bewegungsablauf ausführt, in dessen Verlauf der Manipulatorkopf 72 die Greiferköpfe 70 von oben her auf Artikel 02 des Zulaufs 03 absenkt, wieder anhebt, zur Bereitstellungsfläche verfährt, die Greiferköpfe 70 in auf der Bereitstellungsfläche 04 bereitstehende Umverpackungen 05 absenkt, wieder anhebt und schließlich wieder über den Zulauf 03 verfährt, und
- die Greiferköpfe 70 der Greifeinrichtung 07 so steuert, dass jeder Greiferkopf 70 nach dem Absenken des Manipulatorkopfs 72 von oben her auf Artikel 02 des Zulaufs 03 jeweils einen Artikel 02 des Zulaufs 03 erfasst und festhält, bis die Greiferköpfe 70 im Verlauf des zyklischen Bewegungsablaufs des Manipulators 71 in auf der Bereitstellungsfläche 04 bereitstehende Umverpackungen 05 absenkt worden ist.

Eine solche Steuereinrichtung kann darüber hinaus die Bereitstellung leerer Umverpackungen 05 auf der Bereitstellungsfläche 04 steuern, ebenso wie den Abtransport von Umverpackungen mit in diese eingesetzten Artikeln 05 von der Bereitetellungsfläche 04.

Eine zuvor beschriebenen Vorrichtung 01 kann ein in seinem Ablauf in der Abfolge der Fig. 1 bis Fig. 10 beispielhaft dargestelltes Verfahren zum Umgang mit Artikeln 02 ausführen, welcher Umgang vorsieht, mehrere Artikel 02 gleichzeitig aus einem Zulauf 03 zu entnehmen und in mindestens eine auf einer Bereitstellungsfläche 04 bereitstehende Umverpackung 05 umzusetzen.

Ein solches Verfahren sieht vor, zunächst zumindest mehrere in einer Transportrichtung FR des Zulaufs 03 hintereinander eintreffende Artikel 02 aus dem Zulauf 03 zu entnehmen, indem diese wie in Fig. 10, Fig. 1 und Fig. 2 in zeitlicher Abfolge dargestellt von oben her kommend erfasst und/oder gegriffen und daraufhin angehoben werden.

Anschließend sieht das Verfahren vor, dass die Artikel 02 während diese gleichzeitig angehoben sind und wie in Fig. 2, Fig. 3, Fig. 4 und Fig. 5 in zeitlicher Abfolge dargestellt gemeinsam vom Zulauf 03 zu einer Bereitstellungsfläche 04 transferiert werden, auf welcher eine oder mehrere Umverpackungen 05 bereitstehen, in welche die dem Zulauf 03 entnommenen Artikel 02 eingesetzt werden sollen, einzeln oder gruppenweise in einer Richtung parallel zur Transportrichtung gesehen durch Vergrößerung und/oder Verkleinerung individueller Abstände zwischen den Artikeln 02 in Transportrichtung FR gesehen entsprechend einer durch eine oder mehrere auf der Bereitstellungsfläche 04 bereitstehenden Umverpackungen 05 vorgegebenen, vor dem Einsetzen der Artikel 02 in die Umverpackungen 05 herzustellenden Anordnung angeordnet und dadurch gruppiert werden.

Schließlich sieht das Verfahren vor, die entsprechend einer durch eine oder mehrere auf der Bereitstellungsfläche 04 bereitstehenden Umverpackungen 05 vorgegebene, vor dem Einsetzen der Artikel 02 in die Umverpackungen 05 herzustellenden Anordnung angeordneten Artikel 02 gleichzeitig in die eine oder mehreren auf der Bereitstellungsfläche 04 bereitstehenden Umverpackungen 05 abzusenken, wie in Fig. 5, Fig. 6 und Fig. 7 in zeitlicher Abfolge dargestellt und wie in Fig. 7 und Fig. 8 in zeitlicher Abfolge dargestellt freizugeben.

Im Anschluss hieran kann sich das Verfahren beginnend beim ersten Verfahrensschritt wiederholen, wie in Fig. 8, Fig. 9 und Fig. 10 in zeitlicher Abfolge anhand einer Rückführungsbewegung des Manipulatorkopfs 72 mit den daran angeordneten Greiferköpfen 70 der Vorrichtung 01 dargestellt.

Der Zulauf 03 kann beispielsweise in einem oder mehreren Artikelströmen 21 aus ununterbrochenen unmittelbar aufeinander folgend und/oder voneinander beabstandet, beispielsweise bereits entsprechend ihrer Anzahl und/oder späteren Anordnung in einer Umverpackung 05 voneinander beabstandet gruppiert, kontinuierlich oder diskontinuierlich vermittels beispielsweise eines oder mehrerer Fördermittel 30 in einer Transportrichtung FR transportierte Artikel 02 umfassen.

Das Verfahren kann vorsehen, quer zur Transportrichtung FR gesehen ebenfalls gleichzeitig mehrere Artikel 02 aus dem Zulauf zu entnehmen, beispielsweise aus mehreren parallel zueinander in Transportrichtung FR verlaufenden, etwa durch Gassenbleche 15 voneinander getrennten, jeweils einen eigenen Artikelstrom 21 bildenden Reihen von geschlossen, ununterbrochenen unmittelbar aufeinander folgend und/oder voneinander beabstandet transportierten Artikeln 02.

Das Verfahren kann außerdem vorsehen, dass Umverpackungen 05, in welche bereits Artikel 02 eingesetzt wurden, von der Bereitstellungsfläche 04 entfernt und neue, leere Umverpackungen 05 auf der Bereitstellungsfläche 04 bereitgestellt werden, wie in Fig. 8, Fig. 9, Fig. 10 und Fig. 11 in zeitlicher Abfolge dargestellt, während die Verfahrensschritte:
- gleichzeitige Entnahme der Artikel 02 aus dem Zulauf 03, sowie
- Anordnung der Artikel 02 entsprechend einer durch eine oder mehrere auf der Bereitstellungsfläche 04 bereitstehenden Umverpackungen 05 vorgegebenen, vor dem Einsetzen der Artikel 02 in die Umverpackungen 05 herzustellenden Anordnung während diese gleichzeitig angehoben und vom Zulauf 03 zur Bereitstellungsfläche 04 transferiert werden,
ausgeführt werden.

Das Verfahren kann ferner vorsehen, dass:
- die Artikel 02 während diese nach ihrer Entnahme aus dem Zulauf 03 noch angehoben sind und vom Zulauf 03 zu einer Bereitstellungsfläche 04 transferiert werden, einzeln oder gruppenweise in einer Richtung quer, beispielsweise orthogonal zur Transportrichtung FR gesehen durch Vergrößerung und/oder Verkleinerung individueller Abstände zwischen den Artikeln 02 quer, beispielsweise orthogonal zur Transportrichtung FR gesehen entsprechend einer durch eine oder mehrere auf der Bereitstellungsfläche 04 bereitstehenden Umverpackungen 05 vorgegebenen, vor dem Einsetzen der Artikel 02 in die Umverpackungen 05 herzustellenden, beispielsweise einer oder mehreren Gruppe 20 entsprechenden Anordnung angeordnet werden, und/oder
- die Artikel 02 während diese nach ihrer Entnahme aus dem Zulauf 03 noch angehoben sind und vom Zulauf 03 zu einer Bereitstellungsfläche 04 transferiert werden, durch individuelle Rotation jeden Artikels 02 um eigene, parallel zu einer Vertikalachse 08 verlaufende Rotationsachsen ausgerichtet werden, und/oder
- die Artikel 02 während diese nach ihrer Entnahme aus dem Zulauf 03 noch angehoben sind und vom Zulauf 03 zu einer Bereitstellungsfläche 04 transferiert werden, durch kollektive Rotation aller angehobenen Artikel 02 oder von aus allen angehobenen Artikeln 02 gebildeten Gruppen 20 von Artikeln 02 um eine oder mehrere, parallel zu einer Vertikalachse 08 verlaufende Schwenkachsen ausgerichtet werden, und/oder
- die gleichzeitig in eine oder mehrere auf der Bereitstellungsfläche 04 bereitstehende Umverpackungen 05 umzusetzenden Artikel 02 dem Zulauf 03 während deren Bewegung in Transportrichtung FR gemeinsam entnommen werden, und/oder
- zur Entnahme der Artikel 02 aus dem Zulauf 03 die tatsächlichen Ist-Positionen der Artikel 02 im Zulauf 03 erfasst werden und die Entnahme der Artikel 02 aus dem Zulauf 03 an diese Ist-Positionen angepasst erfolgt.

Sowohl die beschriebene Vorrichtung 01, als auch das beschriebene Verfahren können alternativ oder zusätzlich einzelne oder eine Kombination mehrerer einleitend in Verbindung mit dem Stand der Technik und/oder in einem oder mehreren der zum Stand der Technik erwähnten Dokumente beschriebene Merkmale aufweisen.

Darüber hinaus kann die Vorrichtung 01 alternativ oder zusätzlich einzelne oder eine Kombination mehrerer zuvor in Verbindung mit dem Verfahren beschriebene Merkmale aufweisen, ebenso wie das Verfahren alternativ oder zusätzlich einzelne oder eine Kombination mehrerer zuvor in Verbindung 01 mit der Vorrichtung beschriebene Merkmale aufweisen kann.

Wichtig ist hervorzuheben, dass die Vorrichtung 01 in Verbindung mit einer Erfassung der Ist-Positionen der in Transportrichtung FR dicht an dicht hintereinander eintreffenden Artikel 02 des Zulaufs 03 ein in Fig. 11 bis 13 ganz oder in Teilen dargestelltes System 1 bilden kann, welches ein in Fig. 14 in seinen Verfahrensschritten dargestelltes Verfahren auszuführen in der Lage ist.

Ein solches System 1 kann beispielsweise zum Abführen von als Getränkebehältnisse 6, die vorliegend durch PET-Flaschen 7 (PET: Polyethylenterephthalat) ausgebildet sind, ausgebildeten Artikeln 02 von einer einen Zulauf 03 bildenden Horizontalfördereinrichtung 10 vorgesehen sein. Die Getränkebehältnisse 6 bzw. die PET-Flaschen 7 werden über die Horizontalfördereinrichtung 10, beispielsweise in Form eines Endlosförderbands 12 im geschlossenen und geordneten Massenstrom bewegt.

In der Seitenansicht aus Fig. 11 ist lediglich eine der parallel geführten, jeweils einen Artikelstrom 21 bildenden Reihen an Getränkebehältnissen 6 zu erkennen, jedoch werden mehrere derartige Reihen parallel zueinander mittels des Endlosförderbandes 12 geführt und sind hierbei über in Fig. 11 ebenso nicht zu erkennende Gassenbleche 15 (vgl. Fig. 13) getrennt. Mittels Pfeildarstellung ist eine die Transportrichtung FR des Zulaufs 03 bildende Förderrichtung für die Getränkebehältnisse 6 angedeutet, welche für sämtliche der Reihen parallel verläuft.

Das Endlosförderband 12 wird kontinuierlich und ohne Unterbrechung angetrieben, wobei die Getränkebehältnisse 6 über das Endlosförderband 12 durchgehend mit gleichbleibender Transportgeschwindigkeit bewegt werden.

Das System 1 umfasst im Ausführungsbeispiel aus Fig. 11 drei Greiferkopfgruppen 3a bis 3c, bestehend aus jeweils mehreren Greiferköpfen 70, je einem je zu erfassendem Artikel 02 des Zulaufs 03, die in Transportrichtung FR der Getränkebehältnisse 6 bzw. der PET-Flaschen 7 hintereinander angeordnet sind. Die Anzahl der in Fig. 11 dargestellten Greiferkopfgruppen 3a bis 3c ist lediglich beispielhaft zu verstehen, so dass in diversen weiteren Ausführungsformen mehr als drei Greiferkopfgruppen 3a bis 3c oder auch weniger als drei Greiferkopfgruppen 3a bis 3c vorhanden sein können.

Zudem sind zwei in Transportrichtung FR nacheinander angeordnete Erfassungsmittel 17 vorgesehen, die als Lichtschranken 19 ausgebildet sind. In der schematischen Ansicht aus Fig. 11 wurden die Erfassungsmittel 17 bzw. die Lichtschranken 19 nicht mit dargestellt, jedoch sind die Erfassungsmittel 17 bzw. die Lichtschranken 19 mit ihrer möglichen Anordnung entlang der Horizontalfördereinrichtung 12 beispielhaft im Ausführungsbeispiel der Fig. 13 zu erkennen.

Die Greiferkopfgruppen 3a, 3b und 3c bewegen sich im Rahmen einer Bewegungsfahrt parallel zur Transportrichtung FR der Getränkebehältnisse 6 und entlang einer Längserstreckung der Horizontalfördereinrichtung 10 bzw. des Endlosförderbandes 12. Hierzu sind die Greiferkopfgruppen 3a bis 3c mit einer oberhalb der Getränkebehältnisse 6 angeordneten Linearführung in Verbindung gebracht. Die Geschwindigkeit der Greiferkopfgruppen 3a bis 3c ist zunächst vor Anpassung ihrer Bewegungsfahrt und Entgegennahme der Getränkebehältnisse 6 geschwindigkeitssynchron zur Bewegung des fahrbaren Anschlags 14 ausgebildet, mit welchem ein jeweils zuvorderst angeordnetes Getränkebehältnis 6 einer jeden Reihe in Kontakt steht. Die Geschwindigkeit des Anschlags 14 ist gegenüber der Transportgeschwindigkeit der Horizontalfördereinrichtung 10 vermindert. Ebenso bewegt sich der Anschlag 14 in Transportrichtung FR der Getränkebehältnisse 6 bzw. der PET-Flaschen 7.

Jeder der Greiferkopfgruppen 3a bis 3c besitzt für jede Reihe der parallel transportierten Getränkebehältnisse 6 mehrere Aufnahmepositionen A, B, C, und D wie sie in Fig. 12 dargestellt sind und nachfolgend noch detailliert beschrieben werden.

Zudem ist schematisch eine Steuerungseinheit S dargestellt, die mit den Greiferkopfgruppen 3a bis 3c sowie mit den Erfassungsmittel 17 bzw. den Lichtschranken 19 in Wirkverbindung gebracht ist. Auf der Steuerungseinheit S sind Angaben zur jeweiligen Soll-Position SP von Getränkebehältnissen 6 hinterlegt bzw. gespeichert, welche sie bei ihrem Transport mittels der Horizontalfördereinrichtung 12 über den Zeitverlauf einnehmen können. Der Steuerungseinheit S ist weiterhin eine Geschwindigkeit des Anschlags 14 bekannt, an welchem zuvorderst angeordnete Getränkebehältnisse 6 einer Reihe anstehen.

In Abhängigkeit der Soll-Positionen SP über den Zeitverlauf werden die Greiferkopfgruppen 3a bis 3b in Transportrichtung FR entlang der Horizontalfördereinrichtung 12 geführt und besitzen hierbei bei ihrer Bewegungsfahrt zunächst eine Geschwindigkeit, welche identisch zur Geschwindigkeit des Anschlages 14 ausgebildet ist. Die Greiferkopfgruppen 3a bis 3b werden daher zumindest näherungsweise geschwindigkeitssynchron mit den Getränkebehältnissen 6 bewegt.

Da die Getränkebehältnisse 6 als PET-Behälter 7 ausgebildet sind, welche zu Forminstabilitäten neigen, kann es sein, dass aufgrund der Forminstabilität und aus dem druckbeaufschlagten Oberflächenkontakt der aneinander anstehenden Getränkebehältnisse 6 eine Verformung eines oder mehrerer der Getränkebehältnisse 6 resultiert. Aufgrund der Verformung kann die tatsächliche Ist-Position IP eines oder mehrere der Getränkebehältnissen 6 von einer erwarteten Soll-Position SP abweichen. In Fig. 11 ist gut zu erkennen, dass die Ist-Position IP der Getränkebehältnisse 6 in Transportrichtung FR der Soll-Position SP vorauseilt.

Wie erwähnt, steht ein zuvorderst angeordnetes Getränkebehältnis 6 einer jeden der parallelen Reihen an einem Anschlag 14 an, welcher Anschlag 14 eine gegenüber der Transportgeschwindigkeit der Horizontalfördereinrichtung 10 bzw. des Endlosförderbandes 12 verminderte Geschwindigkeit besitzt und den Transport der Getränkebehältnisse 6 verzögert. Der Anschlag 14 ist senkrecht zur Transportrichtung FR der Getränkebehältnisse 6 bzw. der PET-Flaschen 7 orientiert. Durch die Verzögerung über den Anschlag 14 werden einerseits Lücken in Transportrichtung FR, welche ggf. zwischen aufeinanderfolgenden Getränkebehältnissen 6 ausgebildet sein können, geschlossen. Weiter führt eine Verzögerung zu einem erhöhten druckbeaufschlagten Oberflächenkontakt der Getränkebehältnisse 6, woraus Verformungen der Getränkebehältnisse 6 mit einem bereits beschriebenen Abweichen der tatsächlichen Ist-Position von einer erwarteten Soll-Position resultieren.

Da erfahrungsgemäß in der Praxis mehrere derartige Verformungen bei einer Mehrzahl von Getränkebehältnissen 6 in Transportrichtung FR auftreten, weicht die tatsächliche Ist-Position von Getränkebehältnissen 6 mit Entfernung vom Anschlag 14 zunehmend von einer erwarteten Soll-Position ab.

Um die Getränkebehältnisse 6 während ihrer kontinuierlichen und unterbrechungsfreien Bewegung durch die Horizontalfördereinrichtung 10 bzw. das Endlosförderband 12 aufnehmen zu können, ist ein vorheriges Ausrichten bzw. ein vorhergehendes Anpassen der Bewegungsfahrt der Greiferkopfgruppen 3a bis 3c notwendig.

Die Erfassungsmittel 17 bzw. die Lichtschranken 19 übermitteln hierbei die tatsächliche Ist-Position IP der Getränkebehältnisse 6 in Transportrichtung FR an die Steuerungseinheit S. Die Steuerungseinheit S ist sodann in der Lage, mittels der Informationen zu der tatsächlichen Ist-Position IP der Getränkebehältnisse 6 die Bewegungsfahrt der Greiferkopfgruppen 3a bis 3c an die tatsächliche Ist-Position der Getränkebehältnisse 6 in Echtzeit anzupassen, so dass nach Anpassung die Getränkebehältnisse 6 über die Greiferkopfgruppen 3a bis 3c ohne Kollision und mit hoher Genauigkeit aufgenommen werden können. Da die Ist-Position IP der Soll-Position vorauseilt, ist zur Anpassung der jeweiligen Bewegungsfahrt der Greiferkopfgruppen 3a bis 3c ein Korrekturversatz in Transportrichtung notwendig.

Hierbei werden die Bewegungsfahrten sämtlicher Greiferkopfgruppen 3a bis 3c gleichzeitig angepasst. Die vor Anpassung identisch zur Geschwindigkeit des Anschlags 14 ausgebildete Bewegungsfahrt wird hierbei kurzzeitig beschleunigt oder verzögert, so dass die Relativposition der Greiferkopfgruppen 3a bis 3c zu den Getränkebehältnissen 6 vermittels der Beschleunigung oder Verzögerung geändert wird und die Greiferkopfgruppen 3a bis 3c nach Anpassung ihrer Bewegungsfahrt bzw. nach kurzzeitiger Beschleunigung oder Verzögerung eine geänderte Relativposition zu den Getränkebehältnissen 6 besitzen.

Die Relativposition ist hierbei derart auszubilden, dass die Aufnahmepositionen A, B und C der Greiferkopfgruppen 3a bis 3c nach Anpassung der Bewegungsfahrt bzw. nach kurzzeitiger Verzögerung oder Beschleunigung für eine Entgegennahme der Getränkebehältnisse 6 zu den Getränkebehältnissen 6 ausgerichtet sind. Wie voranstehend bereits erwähnt, weicht die tatsächliche Ist-Position von Getränkebehältnissen 6 mit Entfernung vom Anschlag 14 zunehmend von einer erwarteten Soll-Position ab. Ein Korrekturversatz in oder gegen die Transportrichtung FR der Getränkebehältnisse 6 ist für die vorauseilende Greiferkopfgruppe 3c betragsmäßig daher geringer ausgebildet als ein Korrekturversatz der in Transportrichtung FR nacheilenden Greiferkopfgruppe 3b. Weiterhin ist ein Korrekturversatz in oder gegen die Transportrichtung FR der Getränkebehältnisse 6 für die Greiferkopfgruppe 3b betragsmäßig geringer ausgebildet als ein Korrekturversatz der in Transportrichtung der Greiferkopfgruppe 3b nacheilenden Greiferkopfgruppe 3a.

Unmittelbar nach Anpassung der jeweiligen Bewegungsfahrten können die Greiferkopfgruppen 3a bis 3c während ihrer weiteren Bewegungsfahrt erneut geschwindigkeitssynchron mit dem Anschlag 14 bzw. mit den Getränkebehältnissen 6 bewegt werden, so dass die Relativposition zwischen den Greiferkopfgruppen 3a bis 3c und den jeweiligen Getränkebehältnissen 6 bzw. den PET-Flaschen 7 beibehalten wird und die Greiferkopfgruppen 3a bis 3c ohne Kollision die Getränkebehältnisse 6 in ihren jeweiligen Aufnahmepositionen A, B und C entgegennehmen können.

Hierzu werden die Greiferkopfgruppen 3a bis 3c gleichzeitig in Richtung der Horizontalfördereinrichtung 12 abgesenkt und während weiterer Bewegungsfahrt mit den Getränkebehältnissen 6 unter Beibehalten ihrer Relativposition zu den Getränkebehältnissen 6 bewegt.

Jeder Aufnahmeposition A, B und C der Greiferkopfgruppen 3a bis 3c ist ein eigener Greifkopf 70, beispielsweise eine eigene Greiftulpe zugeordnet, die in Fig. 11 aus Gründen der Übersichtlichkeit nicht mit dargestellt wurde. Die Greifköpfe 70 sind ebenso mit der Steuerungseinheit S in Verbindung gebracht. Zur Entgegennahme der Getränkebehältnisse 6 bzw. der PET-Flaschen 7 von der Horizontalfördereinrichtung 10 können die Greifköpfe 70 die jeweiligen Getränkebehältnisse 6 an der jeweiligen Greiferkopfgruppe 3a bis 3c temporär fixieren. Ein Zeitpunkt der Fixierung kann über die Steuerungseinheit S vorgegeben werden.

Nach erfolgter temporärer Fixierung der Getränkebehältnisse 6 bzw. PET-Flaschen 7 an der jeweiligen Greiferkopfgruppe 3a bis 3c werden die Greiferkopfgruppen 3a bis 3c zeitgleich in Richtung weg von der Horizontalfördereinrichtung 10 bzw. dem Endlosförderband 12 angehoben. Die Geschwindigkeit der Greiferkopfgruppen 3a bis 3c ist hierbei weiterhin identisch zur Geschwindigkeit des Anschlags 14 ausgebildet.

In besonders bevorzugten Ausführungsformen können die mit der Steuerungseinheit S in Verbindung stehenden Greifeinrichtungen rotieren bzw. die jeweiligen entgegengenommen Getränkebehältnisse 6 rotierend bewegen, so dass ggf. eine Kennzeichnung, wie beispielsweise ein Etikett, der Getränkebehältnisse 6 während ihrem Abführen von der Horizontalfördereinrichtung 10 bzw. dem Endlosförderband 12 ausgerichtet werden kann.

In der Praxis können mittels der Horizontalfördereinrichtung 10 bzw. dem Endlosförderband 12 eine Vielzahl von unterschiedlichen Getränkebehältnissen 6 transportiert werden, die sich in Materialart sowie Materialstärke unterscheiden. Demnach kann mit einem Wechseln von über die Horizontalfördereinrichtung 10 zu transportierenden und nachfolgenden abzuführenden Getränkebehältnissen 6 zunächst ein starkes Abweichen der erwarteten Soll-Position SP von der tatsächlichen Ist-Position IP einhergehen. Um diesem Problem zu begegnen, kann das System 1 als lernfähiges System ausgebildet sein, bei welchem an die Steuerungseinheit S Angaben zu den jeweiligen über die Horizontalfördereinrichtung 10 zu transportierenden Getränkebehältnissen 6 übermittelt werden. Stellt die Steuerungseinheit S ein Abweichen, insbesondere ein sich häufig wiederholendes Abweichen, der zu erwartenden Soll-Position von der tatsächlichen Ist-Position IP von Getränkebehältnisse 6 fest, so kann sie die tatsächlichen Ist-Positionen IP speichern und die zu erwartenden jeweiligen Soll-Positionen an die erfassten tatsächlichen Ist-Positionen während des laufenden Betriebes anpassen. Sofern die jeweiligen Getränkebehältnisse 6 zu einem späteren Zeitpunkt erneut mittels der Horizontalförderung 10 transportiert und von der Horizontalfördereinrichtung 10 abgeführt werden sollen, kann die Steuerungseinheit S auf die gespeicherten Ist-Positionen bzw. auf frühere Erfahrungswerte zurückgreifen.

Aus längerem Betrieb des Systems 1 kann hierbei über die Steuerungseinheit S zunehmend genauer die tatsächliche Ist-Position IP der Getränkebehältnisse 6 vorhergesagt werden, so dass ein Anpassen einer Bewegungsfahrt der Greiferkopfgruppen 3a bis 3c nach bestimmtem Betrieb des Systems 1 nicht mehr oder nur mit geringerem Korrekturversatz notwendig wird.

Eine schematische Draufsicht auf eine Ausführungsform eines erfindungsgemäßen Systems 1 unter Verdeutlichung der Anpassung einer Bewegungsfahrt von mehreren Greiferkopfgruppen 3a bis 3c wird nun in Fig. 12A und Fig. 12B gezeigt.

So sind in Fig. 12A weiterhin die drei die sich im Rahmen ihrer Bewegungsfahrt in Transportrichtung FR der Getränkebehältnisse 6 bewegenden Greiferkopfgruppen 3a bis 3c zu erkennen, sowie der Anschlag 14, welcher ebenso in Transportrichtung FR geführt wird. Bei Fig. 12A wurde die jeweilige Bewegungsfahrt der Greiferkopfgruppen 3a bis 3c noch nicht an die jeweilige erfasste Ist-Position IP von Getränkebehältnissen 6 angepasst.

Fig. 12A zeigt zudem für jeden der Greiferkopfgruppen 3a bis 3c mehrere Aufnahmepositionen A, B, C und D. Die ersten Aufnahmepositionen A der Greiferkopfgruppen 3a, 3b und 3c, welche ersten Aufnahmepositionen A in Transportrichtung FR der Getränkebehältnisse 6 fluchten, sind vorgesehen zur Entgegennahme von Getränkebehältnissen 6 einer ersten der parallelen Reihen (vgl. Fig. 13). Weiter sind die zweiten Aufnahmepositionen B vorgesehen zur Entgegennahme von Getränkebehältnissen 6 einer zweiten der parallelen Reihen, die dritten Aufnahmepositionen C zur Entgegennahme von Getränkebehältnissen 6 einer dritten Reihe sowie die vierten Aufnahmepositionen D zur Entgegennahme von Getränkebehältnissen 6 einer vierten Reihe. Jede der Greiferkopfgruppen 3a bis 3c verfügt daher für jede der parallelen Reihen über jeweils mehrere Aufnahmepositionen A, B, C bzw. D. Die Aufnahmepositionen A, B, C und D werden hierbei jeweils über einen Greiferkopf 70 für jeweils ein Getränkebehältnis 6 ausgebildet.

Im Ausführungsbeispiel der Fig. 12A sind die Aufnahmepositionen A, B, C und D zumindest näherungsweise fest für die jeweiligen Greiferkopfgruppen 3a bis 3c vorgegeben. Eine relative Bewegung der ersten Aufnahmepositionen A zueinander sowie eine relative Bewegung der ersten, zweiten, dritten und/oder vierten Aufnahmepositionen A, B, C und D zueinander, ist in Fig. 12A nicht möglich.

Weiter entspricht die gesamte Anzahl an ersten, zweiten, dritten und vierten Aufnahmepositionen A, B, C und D der ersten Greiferkopfgruppe 3a, der zweiten Greiferkopfgruppe 3b sowie der dritten Greiferkopfgruppe 3c jeweils einer Anzahl an für eine Verpackungseinheit vorgesehenen Getränkebehältnissen 6. Über eine Entgegennahme an Getränkebehältnissen 6 von der Horizontalfördereinrichtung 10 (vgl. Fig. 11) und nachfolgendem Absetzen kann somit eine Verpackungseinheit über eine Greiferkopfgruppe 3a, 3b, bzw. 3c vollständig mit Getränkebehältnissen 6 ausgestattet werden.

Bei der in Fig. 12B gezeigten Ausführungsform wurde bereits die Ist-Position IP von Getränkebehältnissen 6 erfasst und die Bewegungsfahrt der Greiferkopfgruppen 3a bis 3c an die erfasste Ist-Position IP angepasst. Hierbei wurden gemäß Ausführungsbeispiel der Fig. 12B die ersten, zweiten, dritten und vierten Aufnahmepositionen A, B, C und D der Greiferkopfgruppen 3a bis 3c jeweils relativ zueinander verstellt. Zu der relativen Verstellung der ersten, zweiten, dritten und vierten Aufnahmepositionen A, B, C und D kann ergänzend oder alternativ ein Korrekturversatz der Greiferkopfgruppen 3a bis 3c, wie bereits zu Ausführungsbeispiel der Fig. 11 beschrieben, in Abhängigkeit der jeweils erfassten Ist-Position IP erfolgen.

In Fig. 12B ist die Verstellung der ersten Aufnahmepositionen A der Greiferkopfgruppen 3a bis 3C, der zweiten Aufnahmepositionen B der Greiferkopfgruppen 3a bis 3c, der dritten Aufnahmepositionen C der Greiferkopfgruppen 3a bis 3c sowie der vierten Aufnahmepositionen D der Greiferkopfgruppen 3a bis 3C jeweils zeitsynchron und zumindest annäherungsweise in Echtzeit nach Ermitteln der jeweiligen Ist-Position durch die Erfassungsmittel 17 erfolgt.

Wie bereits vorhergehend erwähnt, nimmt aufgrund der Forminstabilität der Getränkebehältnisse 6 eine Abweichung der tatsächlichen Ist-Position IP von Getränkebehältnissen 6 von einer zu erwartenden Soll-Position SP mit zunehmender Entfernung vom Anschlag 14 zu. Demnach wurden die Aufnahmepositionen A, B, C und D der Greiferkopfgruppe 3a, welcher die größte Entfernung zum Anschlag 14 besitzt, um einen größeren Betrag als die Aufnahmepositionen A, B, C und D der Greiferkopfgruppe 3b, welcher der Greiferkopfgruppe 3a vorauseilt, verstellt. Weiterhin wurden die Aufnahmepositionen A, B, C und D der Greiferkopfgruppe 3c, welcher der Greiferkopfgruppe 3b vorauseilt, um einen kleineren Betrag als die Aufnahmepositionen A, B, C und D der Greiferkopfgruppe 3b verstellt. Die Verstellung sämtlicher der Aufnahmepositionen A, B, C und D erfolgt ggf. jeweils in oder gegen die Transportrichtung FR der Getränkebehältnisse 6 bzw. der PET-Flaschen 7.

In Fig. 13 ist weiterhin die Führung der Getränkebehältnisse 6 bzw. der PET-Flaschen 7 in parallelen Reihen und in Transportrichtung FR zu erkennen. Die Greiferkopfgruppen 3a bis 3c aus den vorhergehenden Fig. 11 und 12 sind aus Gründen der Übersichtlichkeit nicht mit dargestellt.

Fig. 13 zeigt mehrere der Horizontalfördereinrichtung 10 bzw. dem Endlosförderband 12 zugeordnete Gassenbleche 15, welche die Getränkebehältnisse 6 bzw. die PET-Flaschen 7 in parallelen Reihen führen. Hierzu sind die Gassenbleche 15 parallel zueinander orientiert. Dargestellt sind zudem zweite Seitenwände 16, welche die Führung der Getränkebehältnisse 6 entlang der Horizontalförderrichtung 10 und in Transportrichtung FR seitlich begrenzen. Wie in Fig. 13 zu erkennen, ragt die vertikale Erstreckung der Gassenbelche 15 und der Seitenwände 16 nicht über einen Hals der als PET-Flaschen 7 ausgebildeten Getränkebehältnisse 6 hinaus, so dass die PET-Flaschen 7 von oben für die Greiferkopfgruppen 3a bis 3c zugänglich gehalten sind.

Weiter sind die Erfassungsmittel 17 dargestellt, auf welche vorherig bereits Bezug genommen wurde. Im Ausführungsbeispiel der Fig. 13 sind zwei Erfassungsmittel 17 vorgesehen, die in Transportrichtung FR der Getränkebehältnisse 6 hintereinander im Bereich der Horizontalfördereinrichtung 10 angeordnet sind. Die Erfassungsmittel 17 sind jeweils ausgebildet als Lichtschranke 19 und besitzen jeweils einen Detektionsbereich DE, welcher sich senkrecht zur Transportrichtung FR der Getränkebehältnisse 6 erstreckt.

Fig. 4 zeigt wesentliche Schritte einer Ausführungsform eines durch das zuvor beschriebene System 1 ausgeführten Verfahrens 2.

So wird in einem ersten Schritt eine Ist-Position IP eines oder mehrerer kontinuierliche bewegter Getränkebehältnisse 6 erfasst. Weiter erfolgt in einem nachfolgenden Schritt ein Anpassen einer parallel zur Transportrichtung FR der Getränkebehältnisse 6 orientierten Bewegungsfahrt mehrerer Greiferkopfgruppen 3a bis 3c unter Berücksichtigung der erfassten Ist-Position IP. Nachdem die Bewegungsfahrt angepasst wurde, wird eine Senkbewegung der Greiferkopfgruppen 3a bis 3c bei weiterer Bewegungsfahrt und zur Entgegennahme der Getränkebehältnisse 6 über jeweils eine Aufnahmeposition A, B, C bzw. D durchgeführt.

Abschließend werden die Getränkebehältnisse 6 von der Horizontalfördereinrichtung 10 vermittels einer Hebebewegung der Greiferkopfgruppen 3a bis 3c weggenommen.

### Bazugszeichenliste

- 1: System
- 2: Verfahren
- 3a: Greiferkopfgruppe
- 3b: Greiferkopfgruppe
- 3c: Greiferkopfgruppe
- 6: Getränkebehältnis
- 7: PET-Flasche
- 01: Vorrichtung
- 02: Artikel
- 03: Zulauf
- 04: Bereitstellungsfläche
- 05: Umverpackung
- 06: Horizontalachse
- 07: Greifeinrichtung
- 08: Vertikalachse
- 10: Horizontalfördereinrichtung
- 12: Endlosförderband
- 14: Anschlag
- 15: Gassenblech
- 16: Seitenwand
- 17: Erfassungsmittel
- 19: Lichtschranke
- 20: in eine Umverpackung 05 einzusetzende Gruppe von Artikeln 02
- 21: Artikelstrom
- 30: Fördermittel
- 31: Ende des Zulaufs 03
- 40: Fördermittel
- 70: Greiferkopf
- 71: Manipulator
- 72: Manipulatorkopf

- AR: Abtransportrichtung der Bereitstellungsfläche 04
- FR: Transportrichtung des Zulaufs 03
- ZR: Zufuhrtransportrichtung der Bereitstellungsfläche 04
- A: Erste Aufnahmepositionen
- B: Zweite Aufnahmepositionen
- C: Dritte Aufnahmepositionen
- D: Vierte Aufnahmepositionen
- DE: Detektionsbereich
- IP: Ist-Position
- S: Steuerungseinheit
- SP: Soll-Position

## Patentansprüche

1. Vorrichtung (01) zum Umgang mit Artikeln (02), welcher Umgang vorsieht, mehrere Artikel (02) gleichzeitig aus einem Zulauf (03) zu entnehmen und in mindestens eine auf einer Bereitstellungsfläche (04) bereitstehende Umverpackung (04) umzusetzen, umfassend:
- einen Zulauf (03) aus in einer Transportrichtung (FR) transportierten Artikeln (02),
- mindestens eine in Richtung einer Horizontalachse (06) gesehen neben dem Zulauf (03) angeordnete Bereitstellungsfläche (04), auf welcher mit vom Zulauf (03) entnommenen Artikeln (02) zu befüllende Umverpackungen (05) bereit stehen und/oder bereit gestellt werden und von der die Umverpackungen (05), nachdem die Artikel (02) in diese eingesetzt worden sind, abtransportiert werden, und
- eine Greifeinrichtung (07) zum gleichzeitigen Erfassen von mehreren Artikeln (02) aus dem Zulauf (03),
wobei:
- die Greifeinrichtung (07) je Artikel einen von oben her kommend auf einen Artikel (02) in dem Zulauf (03) absenkbaren Greiferkopf (70) aufweist,
- die Greifeinrichtung (07) mindestens einen Manipulator (71) mit einem zumindest entlang der Horizontalachse (06) horizontal und entlang einer Vertikalachse (08) vertikal beweglichen Manipulatorkopf (72) aufweist, an dem die Greiferköpfe (70) angeordnet sind, und
- die Greiferköpfe (70) in zumindest einer ersten horizontalen Richtung parallel zur Transportrich-tung (FR) des Zulaufs (03) individuell und/oder gruppenweise relativ zueinander am Manipulator-kopf (72) translatorisch beweglich angetrieben angeordnet sind, und
- die Greiferköpfe (70) zusätzlich in einer zweiten horizontalen Richtung orthogonal zur Transportrichtung (FR) des Zulaufs (03) relativ zueinander am Manipulatorkopf (72) beweglich angetrieben angeordnet sind,
**dadurch gekennzeichnet, dass**
die Vorrichtung Erfassungsmittel (17) zur Erfassung der Ist-Positionen der Artikel (02) ausgehend von einer vordersten Entnahmeposition am Ende (31) des Zulaufs (03) entgegen der Transportrichtung (FR) des Zulaufs (03) gesehen umfasst, und
die Vorrichtung dazu ausgebildet ist, die Entnahmepositionen der Greiferköpfe (70) an die Ist-Positionen der Artikel (02) im Zulauf (03) anzupassen.

2. Vorrichtung nach Anspruch 1, wobei die Greiferkopfe (70) in einer ersten horizontalen Richtung parallel zur Transportrichtung (FR) des Zulaufs (03) kollektiv am Manipulator-kopf (72) translatorisch beweglich angetrieben angeordnet sind.

3. Vorrichtung nach Anspruch 1 oder 2, wobei der Manipulatorkopf (72) zusätzlich in Transportrichtung (FR) des Zulaufs beweglich ist.

4. Vorrichtung nach einem der voranstehenden AnsprOche, wobei die Erfassungsmittel (17) einen oder mehrere bildgebende Sensoren sowie eine einen Bilderkennungsalgo-rithmus ausführende Steuereinheit umfassen, die in Echtzeit ein von dem mindestens einen bildgebenden Sensor bereitgestelltes Bild des Zulaufs (03) hinsichtlich der Ist-Po-sitionen der nacheinander vom Ende (31) des Zulaufs (03) entgegen der Transportrich-tung (FR) des Zulaufs (03) gesehen hintereinander eintreffenden und/oder aufgestauten Artikel (02) analysiert und hieraus Steuersignale ableitet, welche individuelle translatori-sche Bewegungen der einzelnen Greiferkopfe (70) am Manipulatorkopf (72) in Richtung parallel zur Transportrichtung (FR) veranlassen, um die Entnahmepositionen der Grei-ferkopfe (70) an die Ist-Positionen der Artikel (02) im Zulauf (03) anzupassen.

5. Vorrichtung nach einem der voranstehenden AnsprOche, wobei die Greiferkopfe (70) um parallel zur Vertikalachse (08) verlaufende Rotationsachsen jeweils einzeln und dadurch relativ zueinander am Manipulatorkopf (72) rotatorisch beweglich angetrieben angeordnet sind.

6. Vorrichtung nach einem der voranstehenden AnsprOche, wobei alle Greiferkopfe (70) gemeinsam um eine parallel zur Vertikalachse (08) verlaufende Schwenkachse oderje-weils mehrere Greiferkopfe (70) gruppenweise um jeweils eine parallel zur Vertikalachse (08) verlaufende Schwenkachse schwenkbar am Manipulatorkopf (72) beweglich ange-trieben angeordnet sind.

7. Vorrichtung nach einem der voranstehenden AnsprOche, wobei die Bereitstellungsfla-che (04) mindestens ein Fordermittel (40) umfasst oder van einem Fördermittel (40) um-fasst ist, auf dem die Umverpackungen (05) bereitstehen oder bereitgestellt werden.

8. Vorrichtung nach einem der voranstehenden AnsprOche, wobei die Bereitstellungsfla-che (04) neben einem Zufuhrfordermittel und/oder einem Abtransportfordermittel oder zwischen einem Zufuhrfordermittel und einem Abtransportfordermittel angeordnet ist, wobei die Umverpackungen (05) zu deren Bereitstellung auf der Bereitstellungsflache (04) auf die Bereitstellungsflache (04) Obergeschoben werden und/oder wobei die Um-verpackungen (05), nachdem die Artikel (02) auf der Bereitstellungsflache (04) in diese eingesetzt warden sind, zu deren Abtransport van der Bereitstellungsflache (04) auf ein Abtransportfordermittel Obergeschoben werden.

9. Vorrichtung nach einem der voranstehenden AnsprOche, wobei der Zulauf (03) min-destens ein Fördermittel (30) umfasst oder van mindestens einem Fordermittel (30) umfasst wird, auf dem die Artikel (02) in einem oder mehreren Artikelstromen (21) in Trans-portrichtung (FR) transportiert werden.

## Claims

1. An apparatus (01) for the handling of articles (02), the handling providing to simultaneously remove a plurality of articles (02) from an infeed (03) and to transpose them into at least one outer packaging (05) staged on a staging surface (04), the apparatus (10) comprising:
- an infeed (03) of articles (02) being transported in a transport direction (FR),
- at least one staging surface (04) disposed next to the infeed (03) as seen in the direction of a horizontal axis (06), on which staging surface (04) outer packagings (05) have been and/or are being staged, which outer packagings (05) are to be filled with articles (02) having been removed from the infeed (03), and from which staging surface (04) the outer packagings (05) are discharged after the articles (02) have been placed therein, and
- a gripping device (07) for the simultaneous seizing of a plurality of articles (02) from the infeed (03),
wherein:
- the gripping device (07) has one gripper head (70) per article, the gripper head (70) being lowerable coming from above onto an article (02) in the infeed (03),
- the gripping device (07) has at least one manipulator (71) with a manipulator head (72) that is at least horizontally movable along a horizontal axis (06), and vertically movable along a vertical axis (08), at which manipulator head (72) the gripper heads (70) are disposed,
- the gripper heads (70) are disposed at the manipulator head (72) to be individually and/or groupwise translationally movably driven relative to each other in at least a first horizontal direction parallel to the transport direction (FR) of the infeed (03), and
- the gripper heads (70) are disposed at the manipulator head (72) to be additionally movably driven relative to each other in a second horizontal direction orthogonal to the transport direction (FR) of the infeed (03),
**characterised in that**
the apparatus comprises detection means (17) for detecting the actual positions of the articles (02) based on a foremost removal position at the end (31) of the infeed (03) as seen opposite to the transport direction (FR) of the infeed (03), and
the apparatus is configured to adapt the removal positions of the gripper heads (70) to the actual positions of the articles (02) in the infeed (03).

2. The apparatus as recited in claim 1, wherein the gripper heads (70) are disposed at the manipulator head (72) to be collectively translationally movably driven in a first horizontal direction parallel to the transport direction (FR) of the infeed (03).

3. The apparatus as recited in claim 1 or 2, wherein the manipulator head (72) is additionally movable in the transport direction (FR) of the infeed.

4. The apparatus as recited in one of the previous claims, wherein the detection means (17) comprise one or more imaging sensors as well as a control unit carrying out an image recognition algorithm, with the control unit analysing in real time an image of the infeed (03) provided by the at least one imaging sensor with regard to the actual positions of the articles (02) successively arriving and/or accumulated, one after the other as seen from the end (31) of the infeed (03) opposite the transport direction (FR) of the infeed (03), and with the control unit deriving control signals herefrom, with the control signals causing individual, translational movements of the individual gripper heads (70) at the manipulator head (72) in a direction parallel to the transport direction (FR) in order to adapt the removal positions of the gripper heads (70) to the actual positions of the articles (02) in the infeed (03).

5. The apparatus as recited in one of the previous claims, wherein the gripper heads (70) are disposed at the manipulator head (72) to be rotationally movably driven in each case individually and thus relative to each other about rotational axes running parallel to the vertical axis (08).

6. The apparatus as recited in one of the previous claims, wherein all gripper heads (70) are disposed at the manipulator head (72) to be collectively movably driven swivelable about a swivel axis running parallel to the vertical axis (08), or in each case a plurality of gripper heads (70) to be groupwise movably driven swivelable about in each case one swivel axis running parallel to the vertical axis (08).

7. The apparatus as recited in one of the previous claims, wherein the staging surface (04) comprises at least one conveying means (40) or is comprised by a conveying means (40), on which the outer packagings (05) have been or are being staged.

8. The apparatus as recited in one of the previous claims, wherein the staging surface (04) is disposed next to an infeed conveying means and/or to a discharge conveying means or between an infeed conveying means and a discharge conveying means, wherein the outer packagings (05) are pushed over onto the staging surface (04) for their staging on the staging surface (04) and/or wherein the outer packagings (05), after the articles (02) have been placed therein on the staging surface (04), are pushed over for their discharge from the staging surface (04) onto a discharge conveying means.

9. The apparatus as recited in one of the previous claims, wherein the infeed (03) comprises at least one conveying means (30) or is comprised by at least one conveying means (30), on which the articles (02) are transported in transport direction (FR) in one or in a plurality of article flows (21).

## Revendications

1. Dispositif (01) de manipulation d'articles (02), laquelle manipulation prévoit de prendre simultanément une pluralité d'articles (02) dans une entrée (03) et de déplacer celle-ci dans au moins un suremballage (05) disponible sur une surface de mise à disposition (04), comprenant:
- une entrée (03) d'articles (02) transportés dans une direction de transport (FR),
- au moins une surface de mise à disposition (04) qui, vue dans la direction d'un axe horizontal (06), est disposée à côté de l'entrée (03) et sur laquelle sont disponibles et/ou mis à disposition des suremballages (05) à remplir d'articles (02) retirés de l'entrée (03) et à partir de laquelle les suremballages (05) sont évacués après que les articles (02) ont été introduits dans ceux-ci, et
- un dispositif de préhension (07) destiné à saisir simultanément une pluralité d'articles (02) de ladite entrée (03),
dans lequel:
- ledit dispositif de préhension (07) présente une tête de préhension (70) par article qui, venant d'en haut, peut être abaissée sur un article (02) dans l'entrée (03),
- le dispositif de préhension (07) présente au moins un manipulateur (71) comprenant une tête de manipulateur (72) qui est déplaçable au moins horizontalement le long de l'axe horizontal (06) et verticalement le long d'un axe vertical (08) et sur laquelle sont disposées les têtes de préhension (70),
- lesdites têtes de préhension (70) sont disposées sur la tête de manipulateur (72) de façon à être entraînées de manière mobile à translation dans au moins une première direction horizontale parallèle à la direction de transport (FR) de l'entrée (03), individuellement et/ou par groupes les unes par rapport aux autres, et
- en sus, les têtes de préhension (70) sont disposées sur la tête de manipulateur (72) de façon à être entraînées de manière mobile les unes par rapport aux autres dans une deuxième direction horizontale orthogonale à la direction de transport (FR) de l'entrée (03),
**caractérisé par le fait que**
le dispositif comprend des moyens de détection (17) destinés à détecter les positions réelles des articles (02) à partir d'une position de prélèvement la première à l'extrémité (31) de l'entrée (03), vue à l'encontre de la direction de transport (FR) de l'entrée (03), et
le dispositif est configuré d'adapter les positions de prélèvement des têtes de préhension (70) aux positions réelles des articles (02) dans l'entrée (03) dispositif.

2. Dispositif selon la revendication 1, dans lequel les têtes de préhension (70) sont disposées collectivement sur la tête de manipulateur (72) de façon à être entraînées de manière mobile à translation dans une première direction horizontale parallèle à la direction de transport (FR) de l'entrée (03).

3. Dispositif selon la revendication 1 ou 2, dans lequel, en sus, la tête de manipulateur (72) est déplaçable dans la direction de transport (FR) de l'entrée.

4. Dispositif selon l'une quelconque des revendications précédentes, dans lequel les moyens de détection (17) comprennent un ou plusieurs capteur(s) d'imagerie ainsi qu'une unité de commande qui exécute un algorithme de reconnaissance d'image et qui analyse en temps réel une image de l'entrée (03), fournie par ledit au moins un capteur d'imagerie, quant aux positions réelles des articles (02) entrant et/ou accumulés successivement les uns derrière les autres, vu à l'encontre de la direction de transport (FR) de l'entrée (03) à partir de l'extrémité (31) de l'entrée (03), et qui en déduit des signaux de commande qui provoquent des mouvements translatoires individuels des têtes de préhension (70) individuelles sur la tête de manipulateur (72) dans une direction parallèle à la direction de transport (FR) afin d'adapter les positions de prélèvement des têtes de préhension (70) aux positions réelles des articles (02) dans l'entrée (03).

5. Dispositif selon l'une quelconque des revendications précédentes, dans lequel les têtes de préhension (70) sont disposées sur la tête de manipulateur (72) de façon à être entraînées de manière mobile à rotation autour d'axes de rotation s'étendant parallèlement à l'axe vertical (08), respectivement individuellement et, ainsi, les unes par rapport aux autres.

6. Dispositif selon l'une quelconque des revendications précédentes, dans lequel toutes les têtes de préhension (70) sont disposées sur la tête de manipulateur (72) de façon à être entraînées en commun de manière mobile à pivotement autour d'un axe de pivotement s'étendant parallèlement à l'axe vertical (08), ou respectivement plusieurs têtes de préhension (70) sont disposées sur la tête de manipulateur (72) de façon à être entraînées par groupes de manière mobile à pivotement autour de respectivement un axe de pivotement s'étendant parallèlement à l'axe vertical (08).

7. Dispositif selon l'une quelconque des revendications précédentes, dans lequel la surface de mise à disposition (04) comprend au moins un moyen de transport (40) ou est comprise par un moyen de transport (40) sur lequel les suremballages (05) sont disponibles ou mis à disposition.

8. Dispositif selon l'une quelconque des revendications précédentes, dans lequel ladite surface de mise à disposition (04) est disposée à côté d'un moyen de transport d'alimentation et/ou d'un moyen de transport d'évacuation ou entre un moyen de transport d'alimentation et un moyen de transport d'évacuation, dans lequel les suremballages (05), pour être mis à disposition sur la surface de mise à disposition (04), sont transférés par poussée sur la surface de mise à disposition (04), et/ou dans lequel les suremballages (05), après que les articles (02) ont été introduits dans ceux-ci sur la surface de mise à disposition (04), sont transférés par poussée sur un moyen de transport d'évacuation pour être évacués de la surface de mise à disposition (04).

9. Dispositif selon l'une quelconque des revendications précédentes, dans lequel l'entrée (03) comprend au moins un moyen de transport (30) ou est comprise par au moins un moyen de transport (30) sur lequel les articles (02) sont transportés en un ou plusieurs flux d'articles (21) dans la direction de transport (FR).
